(19) Europäisches Patentamt
European Patent Office
Office européen des brevets

(11) Veröffentlichungsnummer: **0 150 319**
**B1**

(12) # EUROPÄISCHE PATENTSCHRIFT

(45) Veröffentlichungstag der Patentschrift: **01.07.87**

(51) Int. Cl.⁴: **G 03 C 5/54**, C 09 B 29/36

(21) Anmeldenummer: **84114316.7**

(22) Anmeldetag: **27.11.84**

(54) **Farbfotografisches Aufzeichnungsmaterial mit einem Farbabspalter für blaugrüne Farbstoffe, ein mit diesen Farbstoffen erzeugtes Farbbild und die Farbstoffe selbst.**

(30) Priorität: **07.12.83 DE 3344295**

(43) Veröffentlichungstag der Anmeldung: **07.08.85 Patentblatt 85/32**

(45) Bekanntmachung des Hinweises auf die Patenterteilung: **01.07.87 Patentblatt 87/27**

(84) Benannte Vertragsstaaten: **BE DE FR GB**

(56) Entgegenhaltungen:
**EP-A-0 003 581**
**EP-A-0 063 808**
**DE-A-2 453 129**
**FR-A-2 184 828**
**FR-A-2 243 194**
**US-A-4 073 781**
**US-A-4 400 318**

(73) Patentinhaber: **Agfa- Gevaert AG, Patentabteilung, D-5090 Leverkusen 1 (DE)**

(72) Erfinder: **Bergthaller, Peter, Dr., Leuchter Gemark 5a, D-5060 Bergisch Gladbach 2 (DE)**
Erfinder: **Fürstenwerth, Hauke, Dr., Morgengraben 3, D-5000 Köln 80 (DE)**
Erfinder: **Stolzenburg, Rudolf, Dipl.- Ing., Bogenstrasse 27, D-4018 Langenfeld (DE)**
Erfinder: **Marx, Paul, Dr., Nauener Strasse 25, D-5090 Leverkusen 1 (DE)**
Erfinder: **Heidenreich, Holger, Dr., Andreas-Gryphius- Strasse 22, D-5000 Köln 80 (DE)**

**EP 0 150 319 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung enthält, aus der bei der Entwicklung ein diffusionsfähiger blaugrüner Farbstoff freigesetzt wird.

Das Farbdiffusionsübertragungsverfahren beruht darauf, daß bei der Entwicklung in einem lichtempfindlichen Element nach Maßgabe einer vorangegangenen Belichtung eine bildmäßige Verteilung diffusionsfähiger Farbstoffe erzeugt und auf ein Bildempfangselement übertragen wird.

Sehr wichtig ist hierbei, daß die Farbstoffe in der Bildempfangsschicht in ausreichendem Maße festgelegt werden können und daß sie außerdem ausgezeichnete spektrale Eigenschaften und hervorragende Stabilität gegen Licht und Wärme aufweisen.

Blaugrüne Farbstoffe für das Farbdiffusionsverfahren, die als Chromophor einen Phthalocyaninrest - bevorzugt in Form des Kupferkomplexes - enthalten, sind z.B. aus DE-A-31 01 036 bekannt.

Nachteilig an den an sich außerordentlich stabilen Farbstoffen ist ihre gegenüber den üblicherweise verwendeten Gelb- und Purpurfarbstoffen verminderte Diffusionsfähigkeit. Diese hat zur Folge, daß der Aufbau des Farbübertrages während der Übertragszeit mit einem Farbgang von rot nach neutral verbunden ist und eine genaue Einhaltung der optimalen Übertragszeit erfordert.

Schnell diffundierende blaugrüne Farbstoffe für das Farbdiffusionsverhalten sind in der Reihe der 4-(4-Nitrophenylazo)-1-naphthole beschrieben worden, z.B. in DE-A-24 06 653 und DE-A-28 53 584.

Die in DE-A-24 06 653 genannten Farbstoffe liegen nach der Abspaltung vom diffusionsfestmachenden Trägerrest in Form eines anionischen Chromophors vor, diffundieren so in die Bildempfangsschicht und werden auch auf dem Beizmittel in der Form des Farbstoffanions festgelegt. Anionische Farbstoffe zeigen allgemein geringe Lichtechtheiten. Es überrascht daher nicht, daß die blaugrünen anionischen Farbstoffe aus der Reihe der 4-(4-Nitrophenylazo)-naphthole eine unbefriedigende Lichtechtheit aufweisen. Zur Behebung dieses Nachteils sind bereits in DE-A-28 53 584 Farbstoffe aus der gleichen Klasse beschrieben, die durch eine zusätzliche Carbamoylsubstitution in ortho-Stellung zur OH-Gruppe bessere Lichtechtheit aufweisen.

Eine Verbesserung der Lichtechtheit sowie der allgemeinen Beständigkeit gegen Wärme und Feuchtigkeit, vor allem in einem abgeschlossenen Schichtverband, einem sogenannten "Monopack", wird durch die Verwendung von Monoazofarbstoffen aus der Reihe der Nitrophenylazonaphthsultame erreicht, die in DE-A-28 06 196 als blaugrüne Farbstoffe für Farbdiffusionsverfahren beschrieben sind.

Allen diesen Farbstoffen ist gemeinsam, daß die Anwesenheit einer Nitrogruppe in para-Position zur Azogruppe den Chromophor gegen Angriff durch Reduktionsmittel labilisiert.

Reduktionsmittel sind jedoch, ganz abgesehen von den Entwicklersubstanzen, in praktisch allen Aufzeichnungsmaterialien für das Farbdiffusionsübertragungsverfahren zur Übernahme bestimmter Funktionen vorhanden. Zum Beispiel enthalten die Zwischenschichten zwischen den einzelnen einer bestimmten Teilfarbe zugeordneten Schichtpaketen üblicherweise Reduktionsmittel, insbesondere solche aus der Reihe der mono- oder dialkylierten Hydrochinone, die zum Abfangen von Entwickleroxidationsprodukten befähigt und dementsprechend reaktiv sind.

Ebenso enthalten Aufzeichnungsmaterialien, die reduzierbare Farbabspalter enthalten, in Zuordnung zu diesen sogenannte Elektronendonor-Verbindungen (ED-Verbindungen) oder deren Vorläufer. Zur Erläuterung ist in diesem Zusammenhang auf folgende Anmeldungen zu verweisen: EP-A-0 004 399, US-A-4 139 379, US-A-4 278 750, DE-A-30 14 669, EP-A-0 038 092, DE-A-30 08 588 und DE-A-30 06 268.

Es ist bekannt, daß 4-Nitrophenylazofarbstoffe leichter als andere Monoazofarbstoffe durch Reduktionsmittel angegriffen werden. Schon der kurze Kontakt zwischen Reduktionsmittel und Chromophor während der Bildentstehungszeit kann bei Gegenwart eines stark alkalischen Verarbeitungsmediums ausreichen, den blaugrünen Farbstoff zu kürzerwellig absorbierenden Verbindungen unbekannter Struktur zu verändern, sodaß seine Nuance von Blaugrün zu Blau oder sogar Violett verändert wird.

Es ist daher wünschenswert, für das Farbdiffusionsverfahren leichtdiffundierende blaugrüne Monoazofarbstoffe bereitzustellen, die keine 4-Nitrophenylazogruppe enthalten und daher weniger reduktionsempfindlich sind.

Der Erfindung liegt die Aufgabe zugrunde neue farbgebende Verbindungen für das Farbdiffusionsübertragsverfahren anzugeben, aus denen bei der fotografischen Entwicklung diffundierende blaugrüne Farbstoffe in Freiheit gesetzt werden, die eine verbesserte Lichtechtheit, verbesserte spektrale Eigenschaften und verbesserte Beständigkeit gegen Reduktionsmittel aufweisen.

Gegenstand der Erfindung ist ein farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält, aus der unter den Bedingungen der alkalischen Entwicklung als Funktion der Entwicklung der Silberhalogenidemulsionsschicht ein diffusionsfähiger Azofarbstoff freigesetzt wird, dadurch gekennzeichnet, daß der Azofarbstoff der folgenden Formel I entspricht:

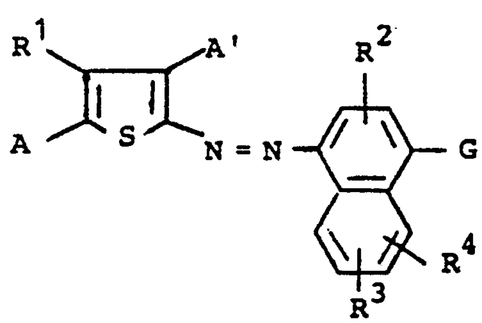

I,

worin bedeuten

A $-CO-R^5$, -CN oder

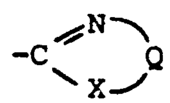

A' einen Rest wie definiert für A, oder $-CF_3$, $-CO-OR^6$, $-CO-NR^6-R^7$ oder $-SO_2-R^8$,

G -OH oder $-NH-SO_2-R^9$,

Q einen Rest, der zusammen mit der Gruppe 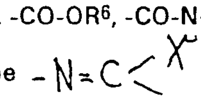 einen heterocyclischen Ring mit Elektronenakzeptorcharakter bildet,

X -O-, -S- oder $-NR^{10}-$,

$R^1$ H, Halogen, Alkyl, Aralkyl, Aryl, $-CO-OR^6$ oder einen Rest der zusammen mit A oder A' sowie den beiden beteiligten C-Atomen des Thiophenringes einen 5-bis 7-gliedrigen Ring bildet,

$R^2$ H oder einen bevorzugt ortho zu G angeordneten Rest mit Elektronenakzeptorcharakter, z.B. einen Rest wie definiert für A' oder $-SO_2-NR^6-R^7$ oder Cl,

$R^3$ H, Acylamino oder einen Rest G' der definiert ist wie G, aber keine Naphthsultamstruktur bilden kann,

$R^4$ H, $-SO_2-NR^6-R^7$ oder eine Bindung in peri-Stellung des Naphthalinringes, die zusammen mit G und den drei beteiligten C-Atomen des Naphthalinringes eine Naphthsultamstruktur bildet,

$R^5$ Alkyl, Aralkyl, Aryl, Thienyl oder einen Rest, der zusammen mit $R^1$, der Carbonylgruppe, sowie den beiden beteiligten C-Atomen des Thiophenringes einen 5- bis 7-gliedrigen Ring bildet,

$R^6$ H, Alkyl, Aralkyl oder einen Rest, der zusammen mit $R^7$ und dem N-Atom den Rest einer cyclischen Aminogruppe bildet,

$R^7$ H, Alkyl, Aralkyl, Aryl oder einen Rest, der zusammen mit $R^6$ und den N-Atomen den Rest einer cyclischen Aminogruppe bildet,

$R^8$ H, Alkyl, Aralkyl, Aryl oder $-NR^6-R^7$,

$R^9$ Alkyl, Aralkyl, Aryl, $-NR^6-R^7$ oder eine Bindung zur peri-Stellung des Naphthalinringes, die zusammen mit der Sulfonamidgruppe und den drei beteiligten C-Atomen des Naphthalinringes eine Naphthsultamstruktur bildet,

$R^{10}$ H oder Alkyl.

Die beiden Reste A und A' stellen somit überwiegend Reste mit Elektronenakzeptorcharakter dar; sie dürfen jedoch nicht eine Nitrogruppe bedeuten. Desgleichen erweist es sich auch als vorteilhaft, wenn $R^2$ ein Rest mit Elektronenakzeptorcharakter ist.

Der Rest G wie auch der durch $R^3$ dargestellte Rest G' kann unter den Bedingungen der alkalischen Entwicklung auch in anionischer Form vorliegen. Desgleichen kann der Rest G zunächst in acylierter Form, z.B. als -O-Acylgruppe vorliegen, die unter den Bedingungen der alkalischen Entwicklung hydrolysiert wird.

Ein durch A bzw. A' dargestellter, mit der Gruppe

FIG4/10

gebildeter heterocyclischer Ring ist beispielsweise der heterocyclische Ring einer Benzoxazol-, Benzothiazol-, Benzimidazol-, Oxadiazol- oder Thiadiazolgruppe wobei die genannten Gruppen weitere Substituenten enthalten können.

Die in den Definitionen von $R^1$ und $R^5$ bis $R^{10}$ genannten Alkylgruppen enthalten vorzugsweise nicht mehr als 4 C-Atome; bevorzugte Beispiele sind Methyl, Ethyl, n-Propyl, Isopropyl, n-Butyl und t-Butyl.

Aralkyl ist beispielsweise Benzyl oder Phenylethyl.

Die genannten Arylgruppen sind vorzugsweise Phenylgruppen oder Naphthylgruppen; sie können weiter substituiert sein, z.B. durch Alkyl, Alkoxy, Acylamino, Sulfamoyl, Sulfinat, jedoch umfassen sie einschließlich solcher Substituenten vorzugsweise nicht mehr als 17 C-Atome.

Bei der in der Definition von $R^6$ und $R^7$ erwähnten cyclischen Aminogruppe handelt es sich um 5- bis 7-gliedrige cyclische Aminogruppen, z.B. die Pyrrolidin-, Piperidin- oder Morpholingruppe.

Acylreste (Acylamino) leiten sich im vorliegenden Fall ab von aliphatischen oder aromatischen Carbonsäuren, Carbaminsäuren oder Kohlensäurehalbestern.

Weiterhin verfügen die Farbstoffe der Formel I, z.B. in Form von G oder in Form einer oder mehrerer der bereits bei $R^1$ bis $R^{10}$ erwähnten Gruppen oder in Form von Substituenten, die gegebenenfalls über ein geeignetes Bindeglied an eine dieser Gruppen gebunden sind, über geeignete funktionelle Gruppen zur Einstellung eines günstigen Diffusions- und Beizverhaltens, z.B. über anionische oder anionisierbare Gruppen, wie Sulfonat-, Sulfinat-, Phenolat-, Naphtholat-, Carboxylat-, Disulfimid- oder Sulfamoylgruppen, sowie über eine funktionelle Gruppe, die aus der Aufspaltung einer Bindung an einen mit einer Ballastgruppe versehenen Trägerrest resultiert und für die Art des Trägerrestes und die Anknüpfung daran charakteristisch ist. Die zuletzt genannte funktionelle Gruppe kann identisch sein mit einer der zuvor genannten das Diffusions- und Beizverhalten modifizierenden Gruppen. Die erwähnte funktionelle Gruppe kann beispielsweise an einen Alkyl- oder Arylrest gebunden sein, der seinerseits Bestandteil einer der unter $R^1$ bis $R^{10}$ erwähnten Gruppen ist.

Vorteilhafte Ergebnisse erhält man insbesondere dann, wenn der freigesetzte Azofarbstoff der folgenden Formel Ia entspricht:

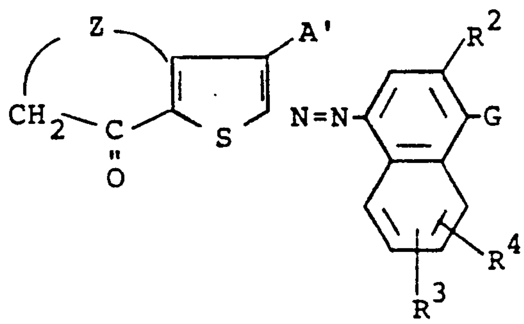

Ia

worin bedeuten

A' -CN, $-CF_3$ oder 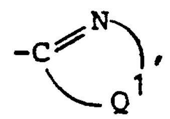,

$Q^1$ einen Rest, der zusammen mit N und C den heterocyclischen Ring einer Benzoxazol-, Benzothiazol-, Benzimidazol-, Oxadiazol- oder Thiadiazolgruppe bildet,

Z eine gegebenenfalls substituierte Methylen- oder Ethylengruppe,

$R^2$ H Cl, -CN oder $-SO_2-NR^6-R^7$,

$R^3$ H, Acylamino, -OH oder $-NH-SO_2-R^{9'}$ und

$R^{9'}$ Alkyl, Aralkyl, Aryl oder $-NR^6-R^7$

und wobei G, $R^4$, $R^6$ und $R^7$ die bereits früher angegebene Bedeutung haben.

Gegenstand der Erfindung sind auch Monoazofarbstoffe der Formel I, von denen die Monoazofarbstoffe der Formel II

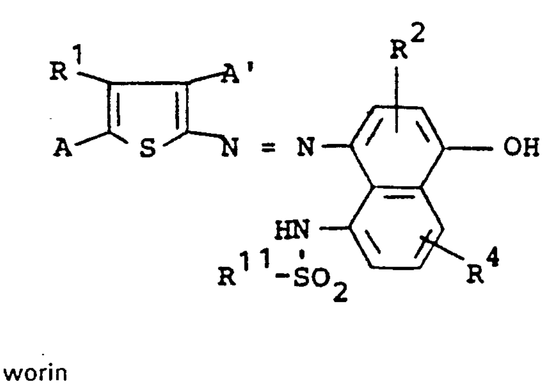

II

besonders bevorzugt sind, worin

$R^{11}$ Alkyl, Aryl oder $-NR^6-R^7$ bedeuten und A, A', $R^1$, $R^2$, $R^4$, $R^6$ und $R^7$ die bereits angegebene Bedeutung haben.

Die Formeln I und II beziehen sich auf die erfindungsgemäßen bei der Entwicklung freigesetzten

diffusionsfähigen Farbstoffe. Diese werden freigesetzt. aus entsprechenden eingelagerten nichtdiffundierenden farbgebenden Verbindungen (Farbabspalter). Hierbei handelt es sich um Verbindungen, in denen beispielsweise ein Farbstoffrest gemäß Formel I an einen mindestens eine Ballastgruppe enthaltenden Trägerrest CAR gebunden ist, gegebenenfalls unter Zwischenschaltung eines geeigneten Bindegliedes.

Die Anknüpfung des Farbstoffes der Formel I an den Trägerrest kann beispielsweise über einen der Substituenten A, A', $R^1$, $R^2$, $R^3$, $R^4$ oder G erfolgen. Die erfindungsgemäßen Farbabspalter lassen sich dementsprechend durch die folgende Formel III darstellen

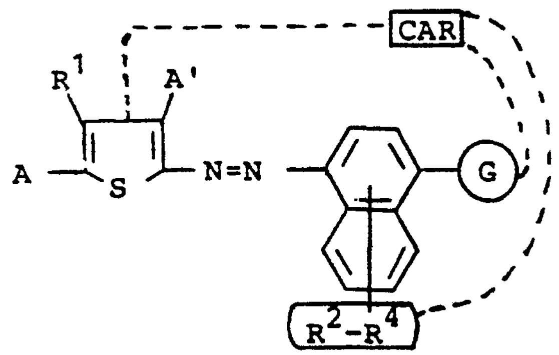

III

worin

A, A', $R^1$ bis $R^4$ und G die bereits angegebene Bedeutung haben,

CAR einen mindestens eine diffusionsfestmachende Gruppe enthaltenden Trägerrest bedeutet,

und die gestrichelten Linien mögliche Verknüpfungsstellen kennzeichnen. In den erfindungsgemäßen Farbabspaltern der Formel III ist somit der Trägerrest als Substituent in einer der durch A, A', $R^1$ bis $R^4$ oder G dargestellten Gruppen enthalten.

Der durch CAR dargestellte Trägerrest weist außer einem Ballastrest mindestens eine Gruppierung auf, die als Funktion der Entwicklung einer Silberhalogenidemulsionsschicht spaltbar ist, so daß der an den Trägerrest gebundene Farbstoff gegebenenfalls zusammen mit einem kleinen Bruchstück des ursprünglichen Trägerrestes von dem Ballastrest abgetrennt und somit aus der Verankerung in der Schicht gelöst werden kann. Je nach der Funktionsweise der spaltbaren Gruppierung können die Trägerreste unterschiedliche Strukturen aufweisen.

Bei den erfindungsgemäßen Farbabspaltern kann es sich um eine Vielfalt von Verbindungstypen handeln, die sich sämtlich durch ein in seiner Bindungsfestigkeit redoxabhängiges Bindeglied auszeichnen, welches den Chromophor mit dem diffusionsfesten Trägerrest verknüpft.

In diesem Zusammenhang ist auf eine zusammenfassende Darstellung des Sachgebiets in Angew. Chem. 95 (1983), Heft 3, Seiten 165 - 184 zu verweisen, in der die wichtigsten der bekannten Systeme beschrieben sind.

Als besonders vorteilhaft erweisen sich hierbei redoxaktive Farbabspalter der Formel

BALLAST - REDOX - FARBSTOFF,

worin bedeuten

BALLAST einen Ballastrest

REDOX eine redoxaktive Gruppe, d.h. eine Gruppe die unter den Bedingungen der alkalischen Entwicklung oxidierbar oder reduzierbar ist und je nachdem, ob sie im oxidierten oder im reduzierten Zustand vorliegt, in unterschiedlichem Ausmaß einer Eliminierungsreaktion, einer nukleophilen Verdrängungsreaktion, einer Hydrolyse oder einer sonstigen Spaltungsreaktion unterliegt mit der Folge, daß der Rest FARBSTOFF abgespalten wird, und

FARBSTOFF den Rest eines diffusionsfähigen Farbstoffes, im vorliegenden Fall eines Farbstoffes gemäß Formel I.

Als Ballastreste sind solche Reste anzusehen, die es ermöglichen, die erfindungsgemäßen Farbabspalter in den üblicherweise bei fotografischen Materialien verwendeten hydrophilen Kolloiden diffusionsfest einzulagern. Hierzu sind vorzugsweise organische Reste geeignet, die im allgemeinen geradkettige oder verzweigte aliphatische Gruppen mit im allgemeinen 8 bis 20 C-Atomen und gegebenenfalls auch carbocyclische oder heterocyclische gegebenenfalls aromatische Gruppen enthalten. Mit dem übrigen Molekülteil sind diese Reste entweder direkt oder indirekt, z.B. über eine der folgenden Gruppen verbunden: $-NHCO-$, $-NHSO_2-$, $-NR-$, wobei R Wasserstoff oder Alkyl bedeutet, $-O-$ oder $-S-$. Zusätzlich kann der Ballastrest auch wasserlöslichmachende Gruppen enthalten, wie z.B. Sulfogruppen oder Carboxylgruppen, die auch in anionischer Form vorliegen können. Da die Diffusionseigenschaften von der Molekülgröße der verwendeten Gesamtverbindung abhängen, genügt es in bestimmten Fällen, z.B., wenn das verwendete Gesamtmolekül groß genug ist, als Ballastreste auch kürzerkettige Reste zu verwenden.

Redoxaktive Trägerreste der Struktur BALLAST-REDOX- und entsprechende Farbabspalter sind in den verschiedensten Ausführungsformen bekannt. Auf eine detaillierte Darstellung kann an dieser Stelle verzichtet werden im Hinblick auf den genannten Übersichtsartikel im Angew. Chem. 95, S. 165 - 184 (1983).

Lediglich zur Erläuterung sind im folgenden einige Beispiele für redoxaktive Trägerreste aufgeführt, von

denen ein Farbstoffrest nach Maßgabe einer bildmäßig stattgefundenen Oxidation oder Reduktion abgespalten wird:

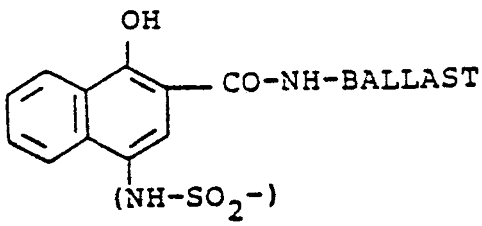

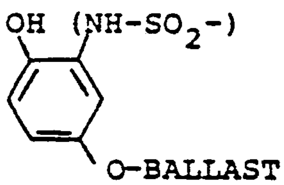

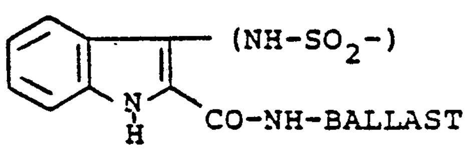

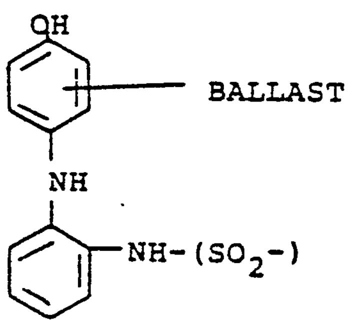

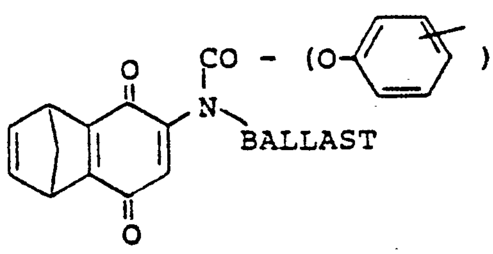

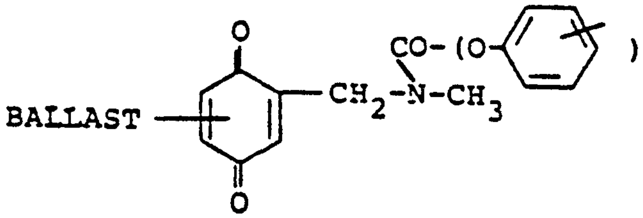

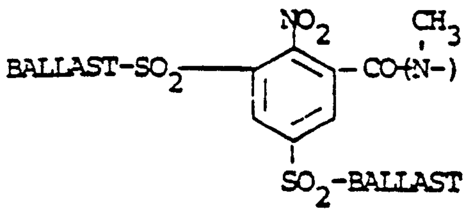

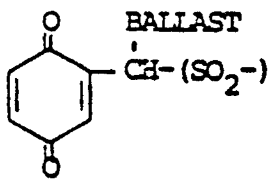

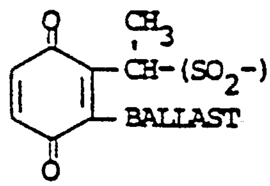

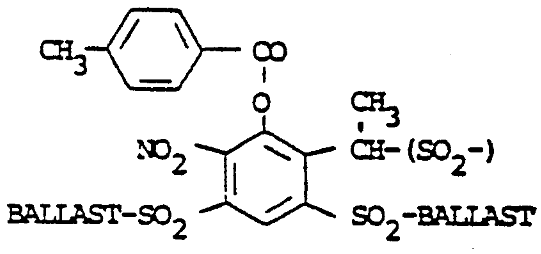

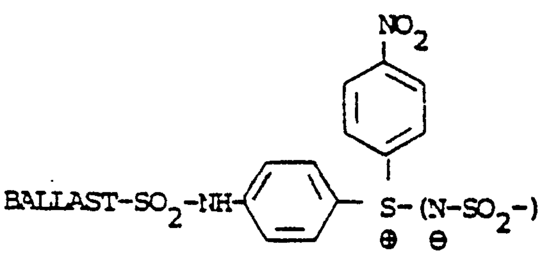

Die in Klammern eingeschlossenen Gruppen, sind funktionelle Gruppen des Farbstoffrestes und werden zusammen mit diesem vom zurückbleibenden Teil des Trägerrestes abgetrennt. Bei der funktionellen Gruppe kann es sich um einen der Substituenten handeln, die bei der Erläuterung der Bedeutung der Reste $R^1$ bis $R^{10}$ in den Formeln I, II und III erwähnt worden sind und die einen unmittelbaren Einfluß auf die Absorptionseigenschaften der erfindungsgemäßen Farbstoffe ausüben können. Die funktionelle Gruppe kann andererseits aber auch von dem Chromophor des erfindungsgemäßen Farbstoffes durch ein Zwischenglied getrennt sein, indem sie sich als Substituent in einer der für $R^1$ bis $R^{10}$ definierten Gruppen befindet, ohne daß hierdurch ein Einfluß auf die Absorptionseigenschaften wirksam werden müßte. Die funktionelle Gruppe kann jedoch gegebenenfalls zusammen mit dem Zwischenglied von Bedeutung sein für das Diffusions- und

Beizverhalten der erfindungsgemäßen Farbstoffe. Geeignete Zwischenglieder sind beispielsweise Alkylen- oder Arylengruppen.

Reduzierbare, reduktiv spaltbare Farbabspalter werden zweckmäßigerweise zusammen mit sogenannten Elektronendonorverbindungen (ED-Verbindungen) verwendet. Letztere wirken als Reduktionsmittel, das bei der Entwicklung des Silberhalogenids bildmäßig verbraucht wird und mit seinem nicht verbrauchten Anteil seinerseits den zugeordneten Farbabspalter reduziert und dadurch die Abspaltung des Farbstoffes bewirkt. Geeignete ED-Verbindungen sind beispielsweise nicht oder nur wenig diffundierende Derivate des Hydrochinons, des Benzisoxazolons, des p-Aminophenols oder der Ascorbinsäure (z.B. Ascorbylpalmitat), die beispielsweise in DE-A-28 09 716 beschrieben sind. Besonders günstige ED-Verbindungen sind Gegenstand von DE-A-30 06 268.

Beispiele geeigneter ED-Verbindungen sind im folgenden aufgeführt.

ED 1

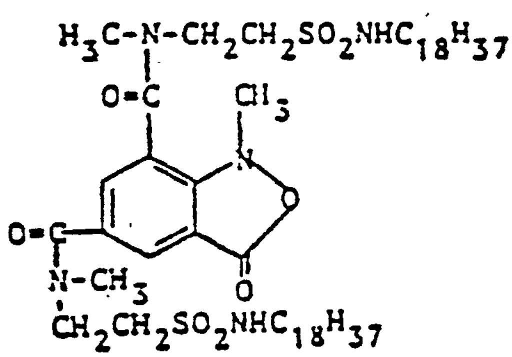

ED 2

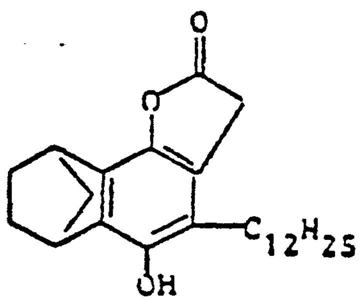

ED 3

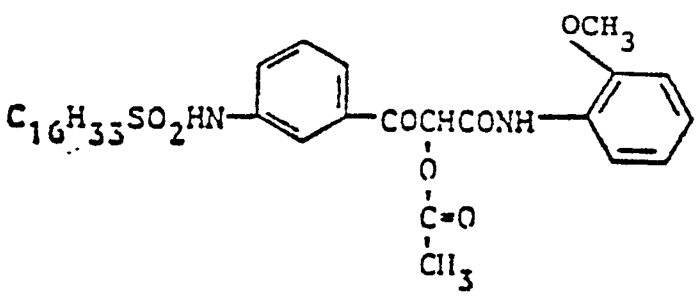

ED 4

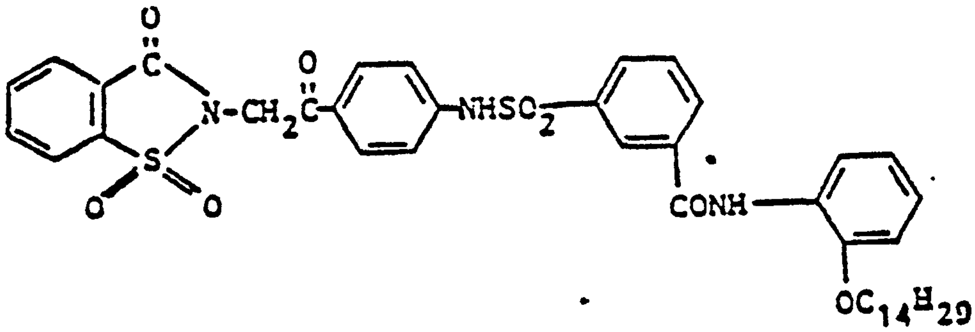

ED 5

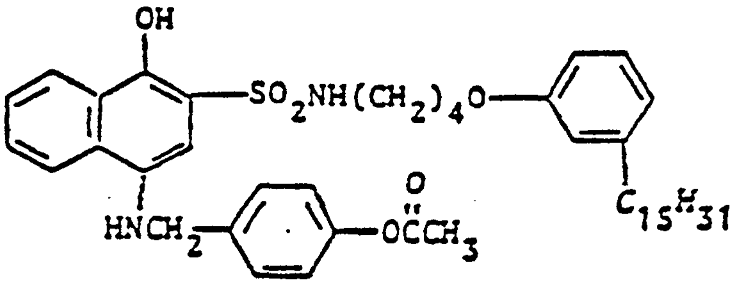

ED 6

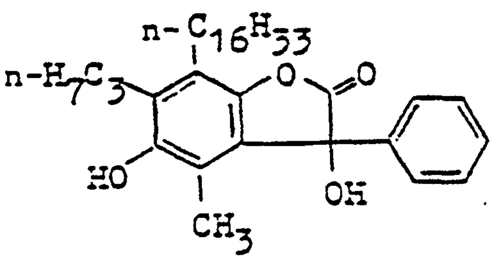

ED 7

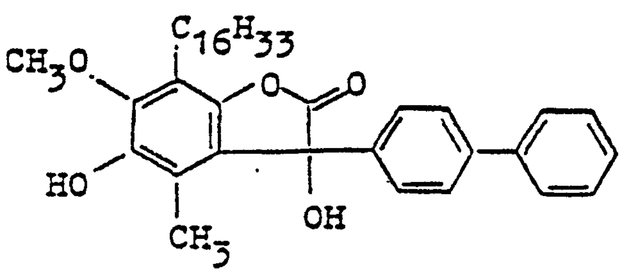

Beispiele für erfindungsgemäße, blaugrüne Monoazofarbstoffe der Formel I mit besonders günstiger Absorption sind im folgenden aufgeführt.

Bei den durch ein Sternchen (*) gekennzeichneten Farbstoffen handelt es sich um Modellfarbstoffe, die in präparativ einfacher Weise in erfindungsgemäße Farbabspalter der Formel III oder daraus freigesetzte Farbstoffe der Formel I überführt werden können.

Farbstoff 1*

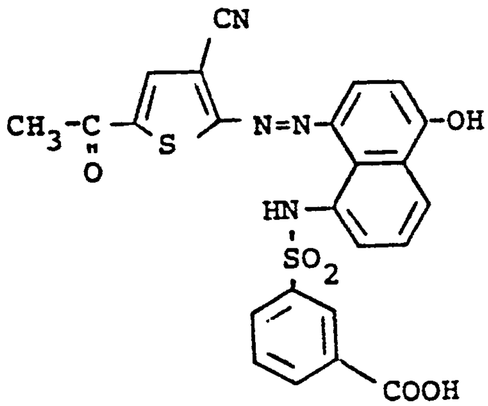

Farbstoff 2

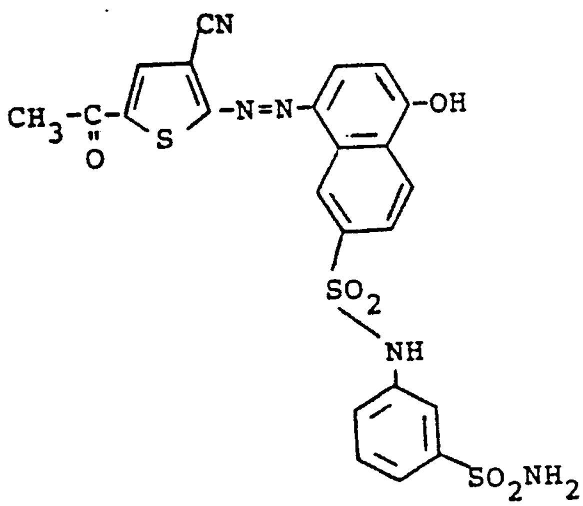

Farbstoff 3*

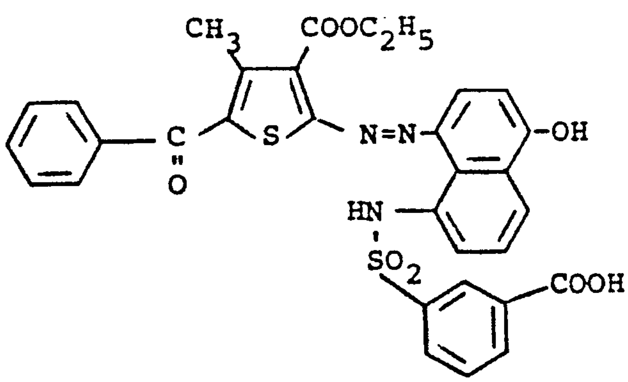

**Farbstoff 4***

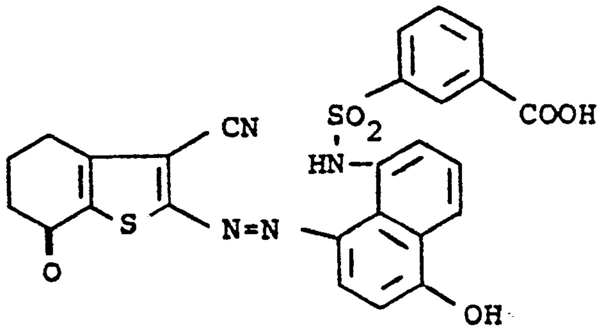

**Farbstoff 5**

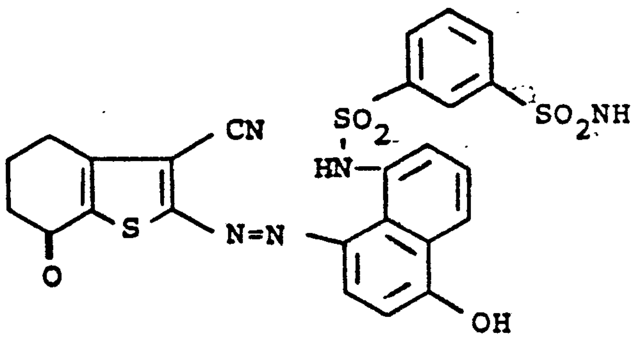

**Farbstoff 6**

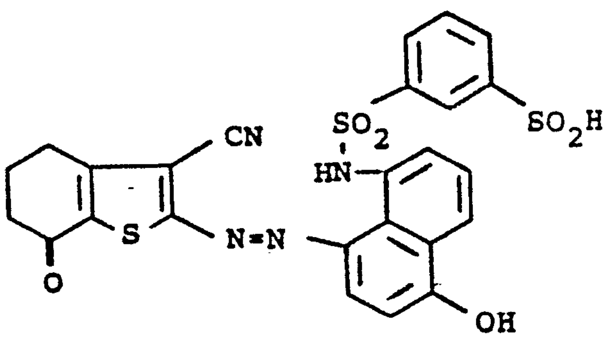

**Farbstoff 7**

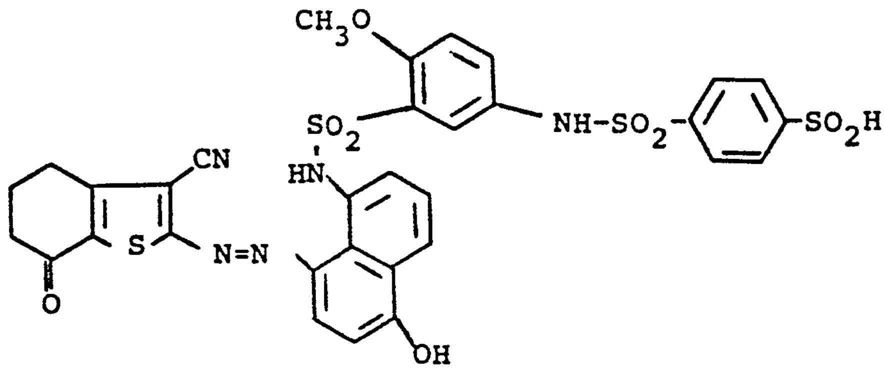

**Farbstoff 8**

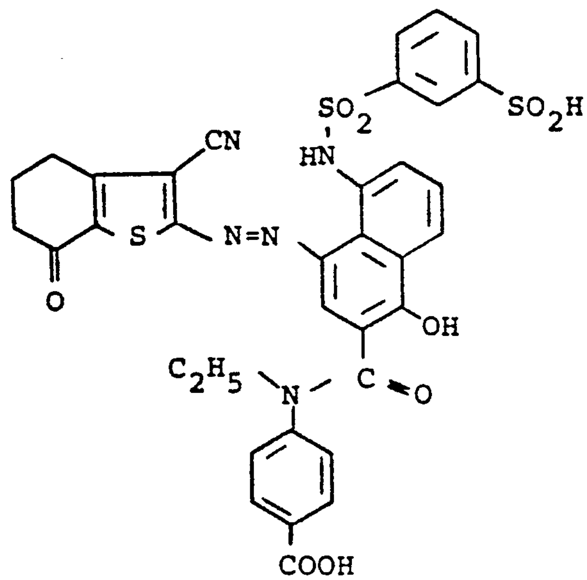

**Farbstoff 9**

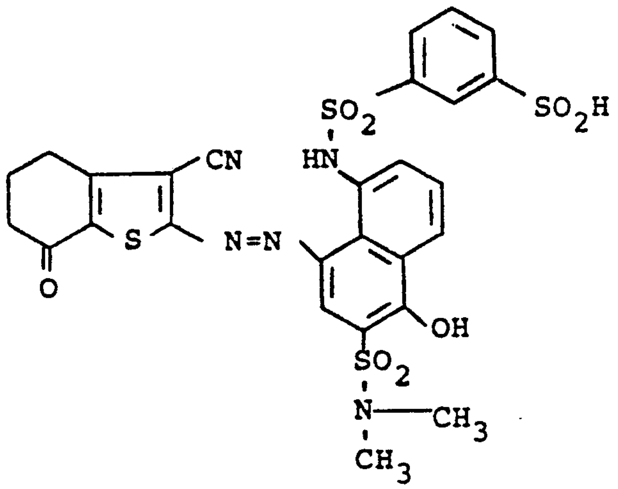

**Farbstoff 10**

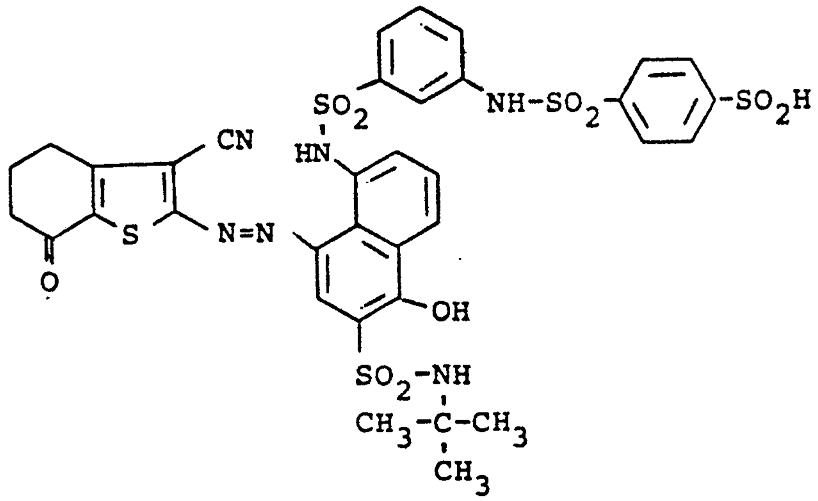

**Farbstoff 11**

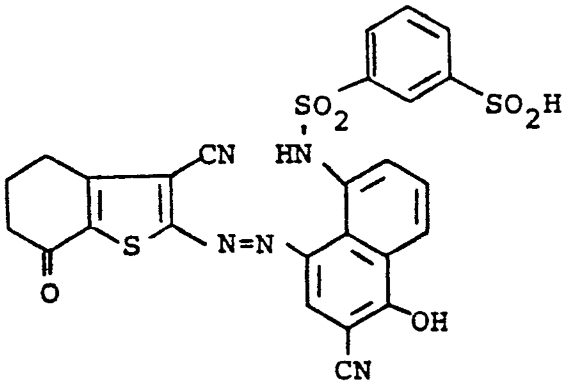

**Farbstoff 12**

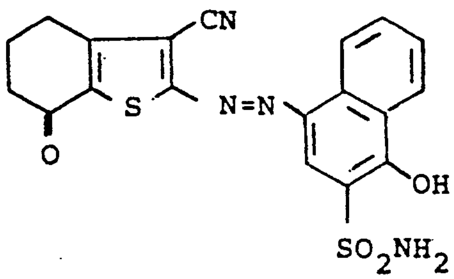

**Farbstoff 13**

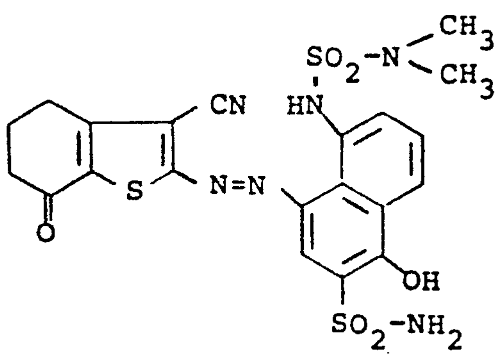

**Farbstoff 14**

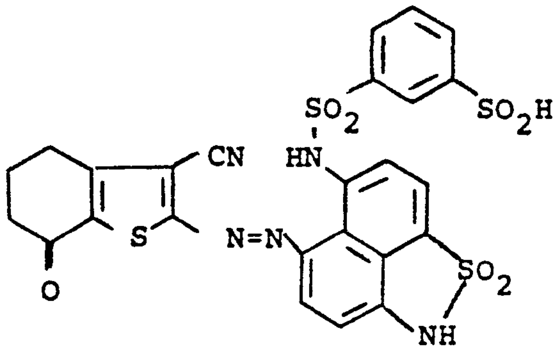

**Farbstoff 15**

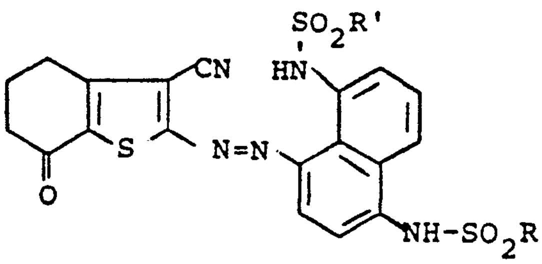

R,R' = $CH_3$ und 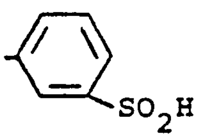

in nicht bekannter Zuordnung

**Farbstoff 16**

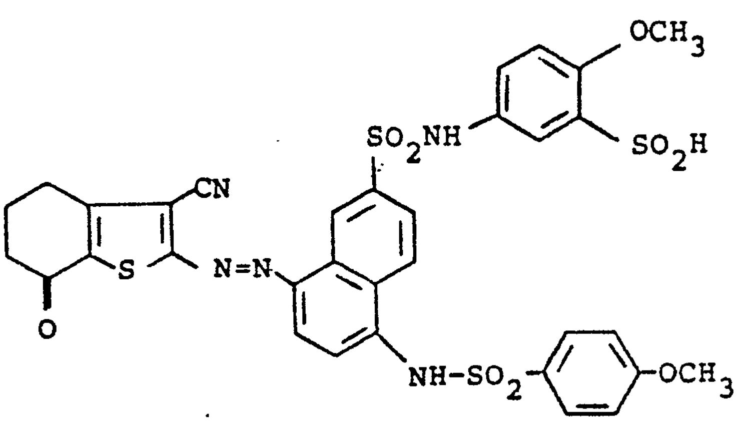

**Farbstoff 17**

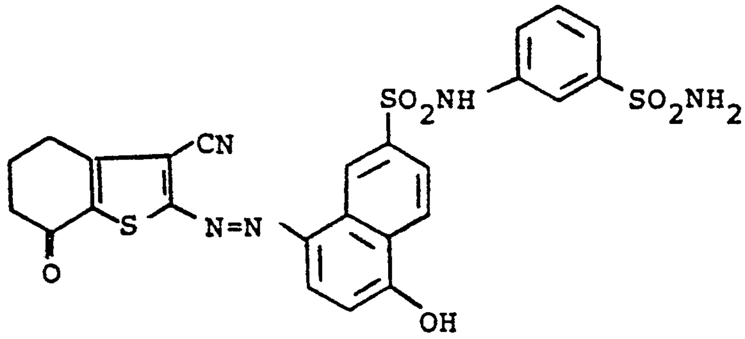

**Farbstoff 18**

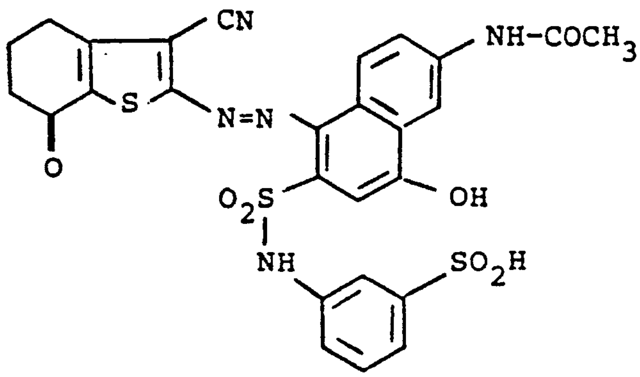

**Farbstoff 19**

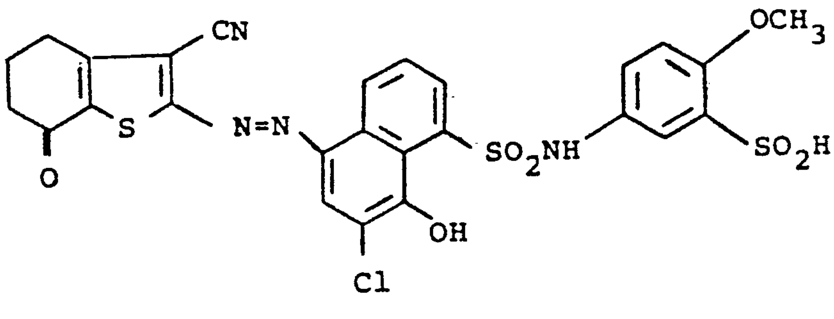

Farbstoff 20

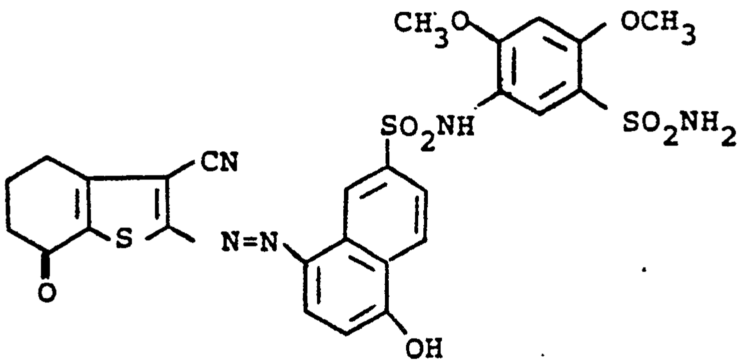

Farbstoff 21

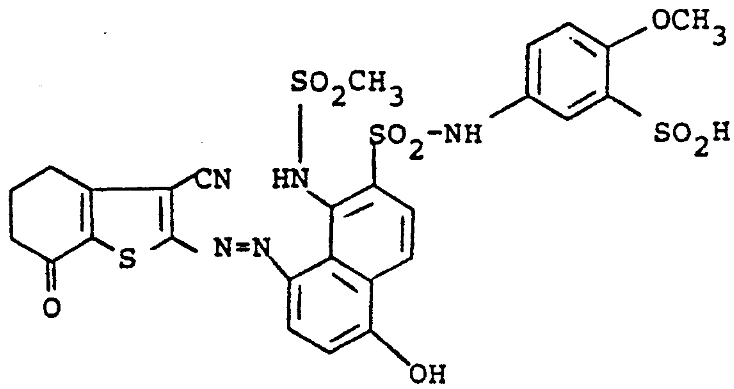

Farbstoff 22

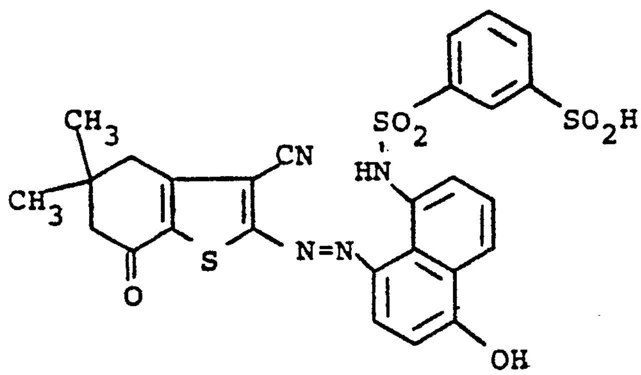

**Farbstoff 23'**

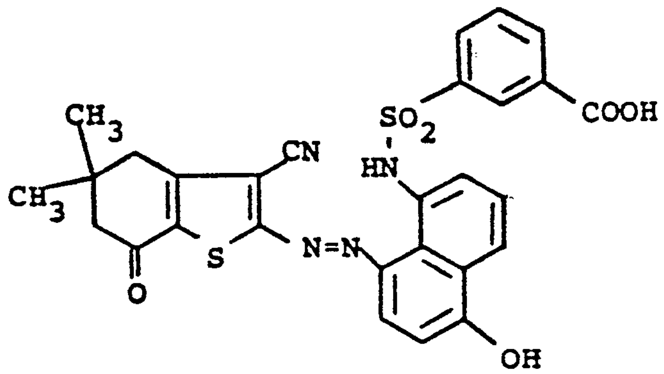

**Farbstoff 24**

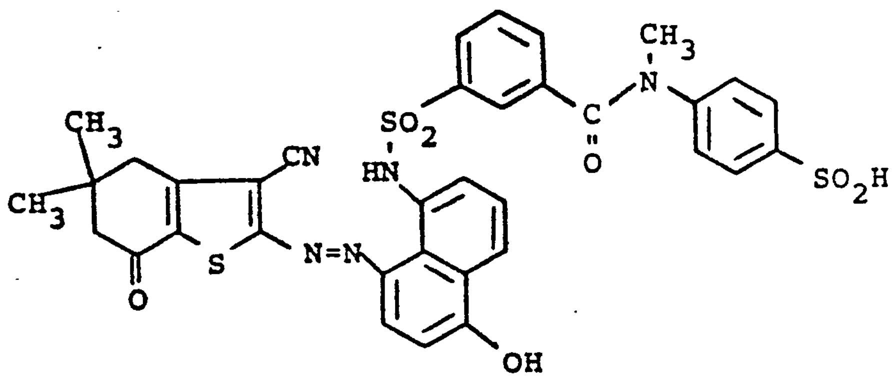

**Farbstoff 25**

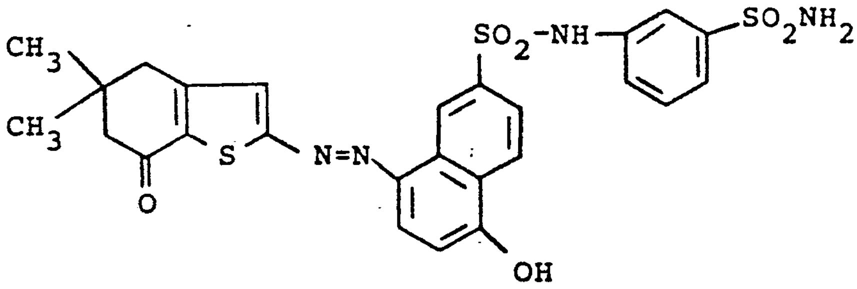

Farbstoff 26

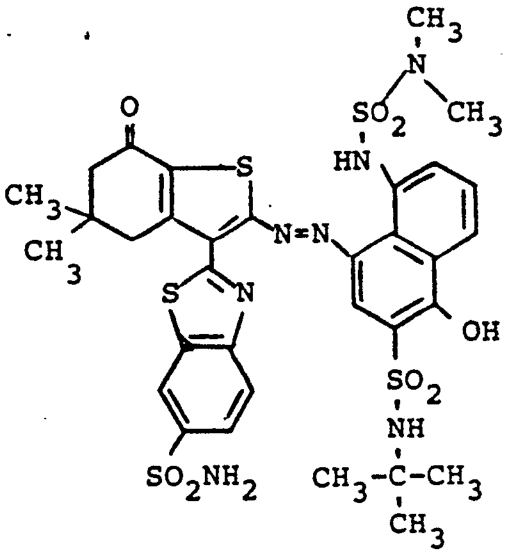

Farbstoff 27

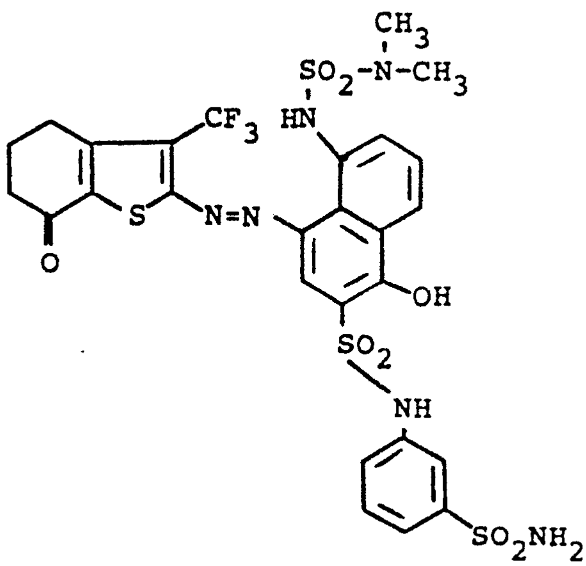

**Farbstoff 28'**

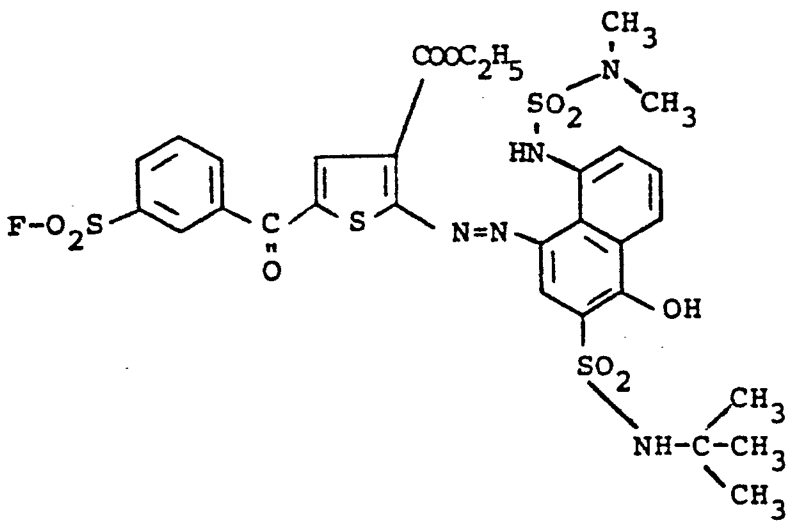

**Farbstoff 29**

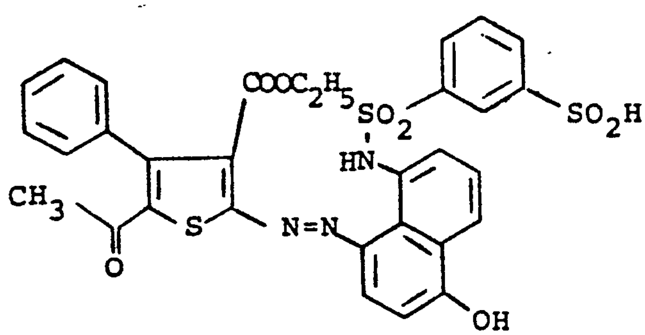

**Farbstoff 30**

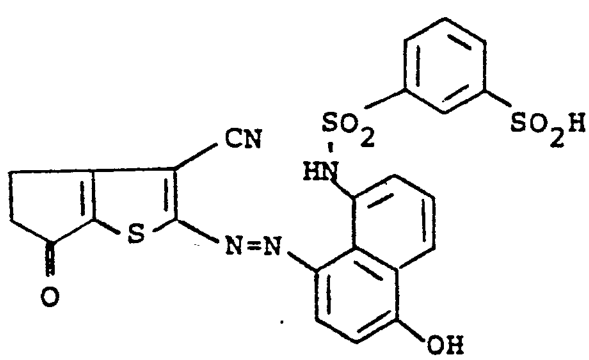

**Farbstoff 31**

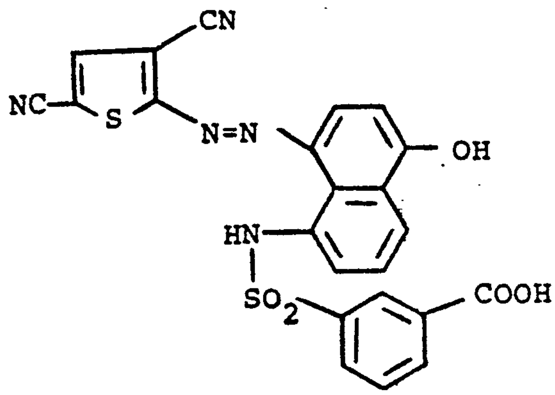

**Farbstoff 32**

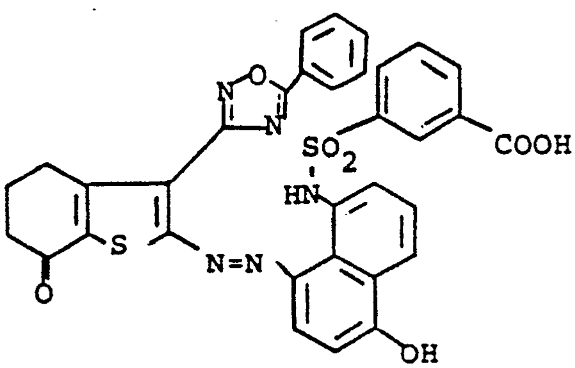

**Farbstoff 33**

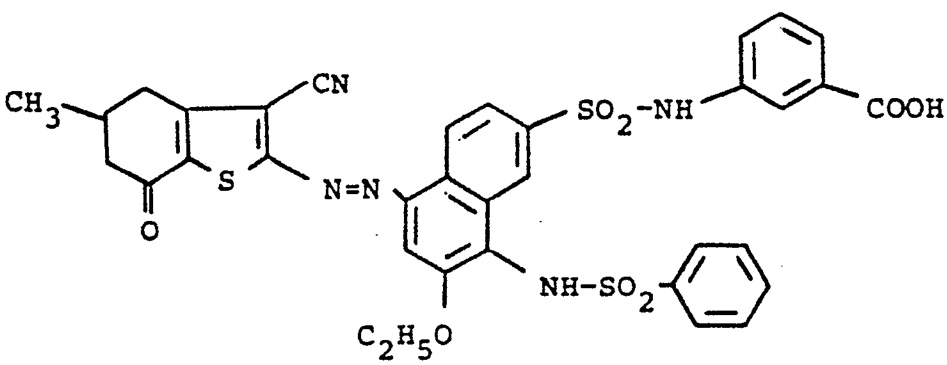

**Farbstoff 34**

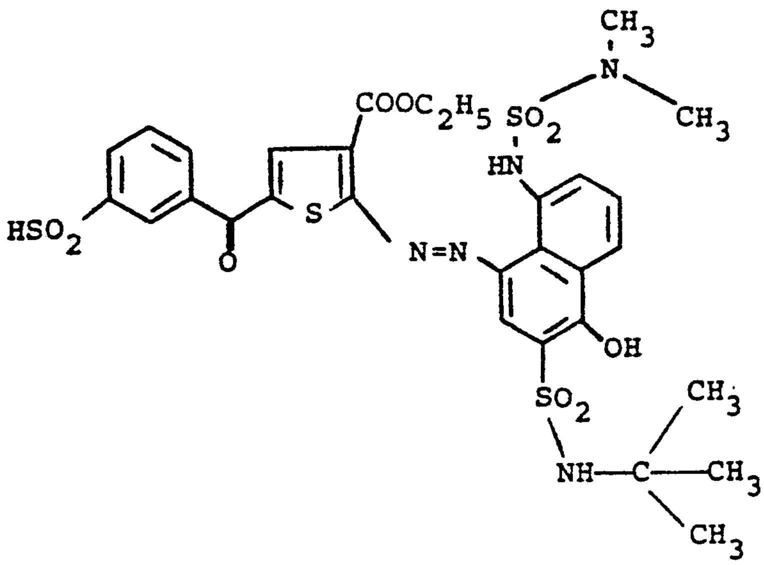

**Farbstoff 35**

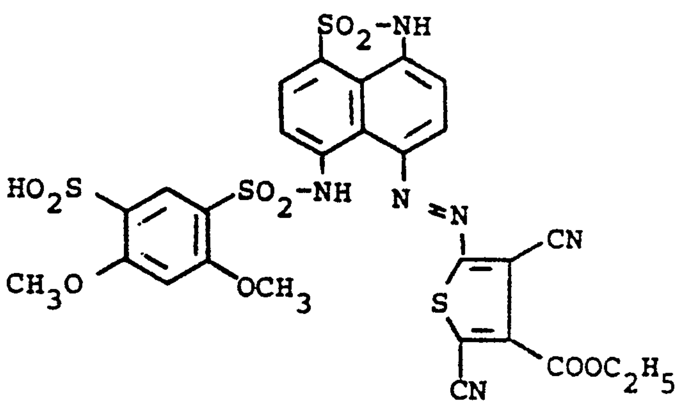

**Farbstoff 36***

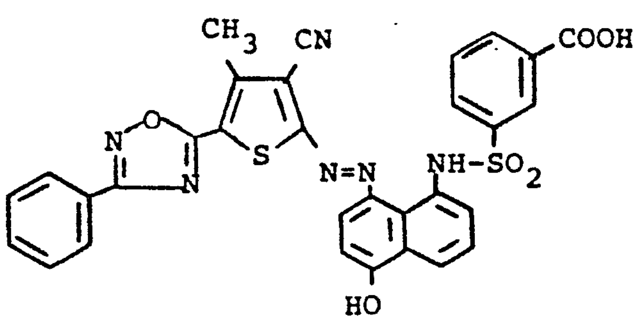

Die erfindungsgemäß verwendeten Monoazofarbstoffe der Formel I sind neu. Ein Teil von ihnen liegt bei pH-Werten unterhalb 5 bis 6 sowie in nicht gebeizter Form nicht in der blaugrünen anionischen Form, sondern als rote bis violette Neutralform vor.

Für die Anwendung in fotografischen Aufzeichnungsmaterialien auf Basis des Farbdiffusionsverfahren ist jedoch gerade dieses Verhalten erwünscht, denn es führt dazu, daß der Farbstoff in der Einlagerungsform keine starke Absorption im Bereich der sensibilisierten Empfindlichkeit einer zugeordneten Emulsionsschicht und somit nur geringe unerwünschte Filterwirkung aufweist.

Eine zusätzliche Verminderung der Filterwirkung des eingelagerten Farbstoffes kann insbesondere durch Blockierung der auxochromen Gruppe G über eine leicht abspaltbare Acylfunktion erreicht werden, insbesondere über eine der in der europäischen Patentanmeldung EP-A-0 009 989 beschriebenen, nach einem Ringschlußmechanismus spaltenden Schutzgruppen.

Die Herstellung der erfindungsgemäßen Monoazofarbstoffe der Formel 1 bzw. der Farbabspalter der Formel III erfolgt üblicherweise durch eine Mehrzahl von Schritten, von denen einer die Verknüpfung mit dem diffusionsfest machenden Trägerrest, ein anderer den Aufbau des Chromophors betrifft. Dieser letztere erfolgt üblicherweise durch Azokupplung des Diazoniumsalzes aus einem entsprechenden di-akzeptorsubstituierten 2-aminothiophen der Formel IV mit einem Naphthol, Naphthsultam oder Sulfonamidonaphthalin der Formel V.

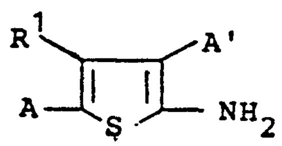

IV

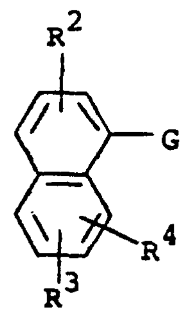

V

In den Formeln IV und V haben A, A', $R^1$ bis $R^4$ und G die bereits früher angegebene Bedeutung. Gegebenenfalls können einzelne Substituenten in funktionell abgewandelter Form vorliegen, d.h. in einer Form, aus der sie durch bekannte präparative Verfahren in die endgültige Form umgewandelt werden können. So kann beispielsweise eine später als Sulfonamid- oder Sulfinsäurefunktion vorliegende Gruppe zunächst in Form des entsprechenden Sulfochlorids bzw. Sulfofluorids eingesetzt werden.

Das Verfahren ist allgemein bekannt und beschrieben und bedarf für den Fachmann keiner weiteren Erläuterung. Geeignete Vorschriften für die Diazotierung und Azokupplung finden sich beispielsweise in DE-A-27 16 033.

Eine Übersicht findet sich in dem Artikel von Weaver und Shuttleworth "Heterocyclic Diazo Components" in Dyes and Pigments 3 [1982], Seiten 98 bis 102.

Angaben zur Synthese von speziellen akzeptorsubstituierten 2-Aminothiophenen finden sich z.B. in Übersichtsartikeln von K. Gewald und S. Rajappa. Zu verweisen ist auf Chimia 34, 101-110 (1980) und Heterocycles 7, 507 bis 527 (1977). Außerdem finden sich brauchbare Angaben zur präparativen Zugänglichkeit von Verbindungen der Formel IV in US-A-4 346 161.

Für die Herstellung der Farbstoffe kommen jedoch auch andere Herstellungsmethoden in Frage, z.B. die Umsetzung eines substituierten 1,4-Naphthochinons mit einem diakzeptorsubstituierten Thienylhydrazin oder die oxidative Kupplung des Hydrazins mit dem Naphthol. Das Hydrazin kann dabei auch in Form eines N-Thienyl-N'-sulfonylhydrazins vorliegen.

Ein allgemein anwendbares Verfahren zur Herstellung von Verbindungen der Formel IV besteht darin, daß man Verbindungen, die in einer ihrer tautomeren Formen der Formel VI

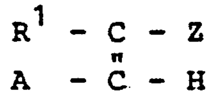

VI

entsprechen, worin

$R^1$ und A die bereits angegebene Bedeutung haben und

Z für eine Hydroxyl-, Ether- oder Amingruppe steht, mit Verbindungen der Formel VII

$$A' - CH_2 - CN$$

in Gegenwart von elementaren Schwefel unter den Bedingungen der bekannten Knoevenagel-Kondensation umsetzt.

Verbindungen der Formel IV, bei denen $R^1$ und A zusammen mit den beiden beteiligten C-Atomen des Thiophenringes einen Ring bilden, gewinnt man zweckmäßigerweise dadurch, daß man Verbindungen, die in einer ihrer tautomeren Formen der Formel VIII

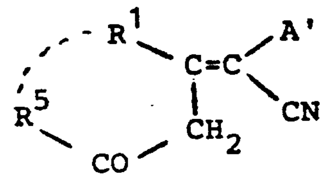

VIII

entsprechen, mit elementarem Schwefel in einem unter den Reaktionsbedingungen indifferenten Medium ringschließend umsetzt.

Die Verbindungen der Formeln VI bis VIII sind entweder bekannt oder nach an sich bekannten Methoden leicht herstellbar.

Eine beispielhafte Übersicht über geeignete 2-Amino-thiophene ("Amin") der Formel IV ist im folgenden aufgeführt.

Die Verfahrensweisen EP-A-0 146 797 (Prioritätstag: 07.12.83; Anmeldetag: 27.11.84; Veröffentlichungstag: 03.07.85) im einzelnen beschrieben.

**Amin 1**

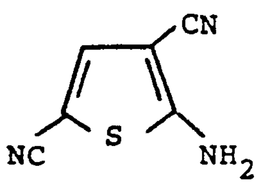

**Amin 2**

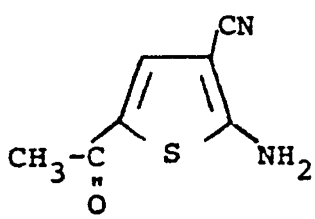

**Amin 3**

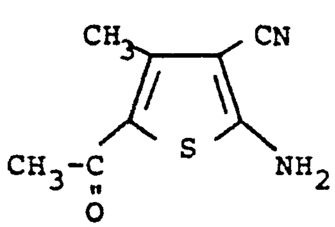

Amin 4

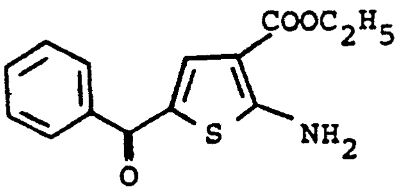

Amin 5

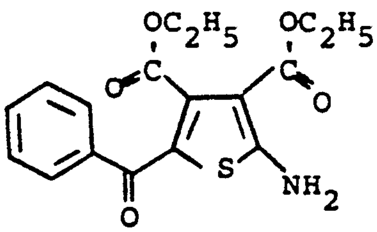

Amin 6

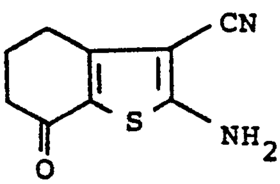

Amin 7

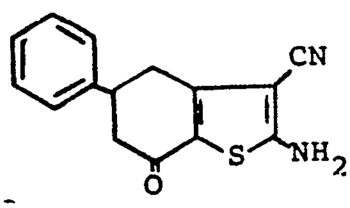

Amin 8

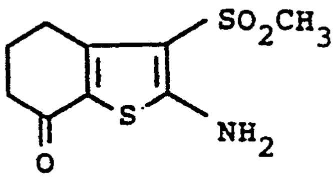

Amin 9

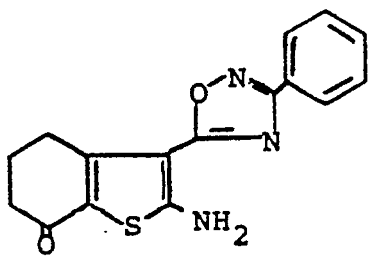

Amin 10

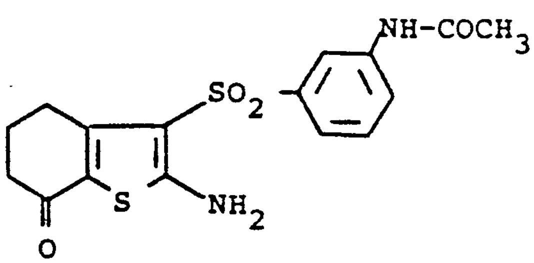

Amin 11

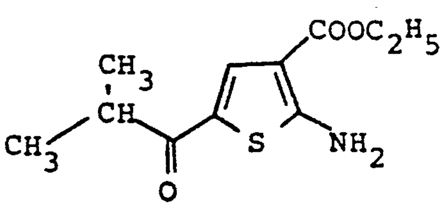

Amin 12

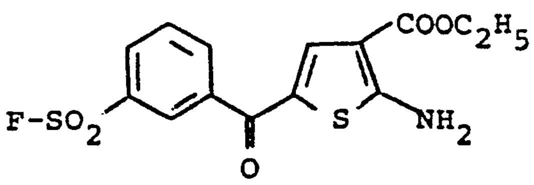

Amin 13

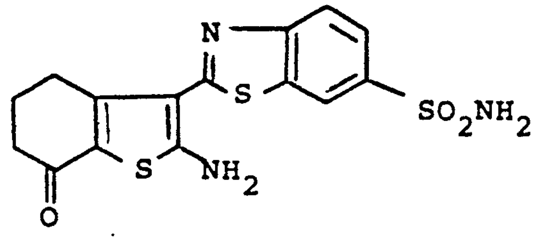

Amin 14

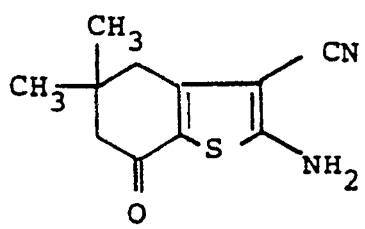

Amin 15

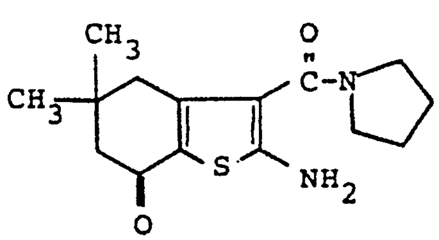

Amin 16

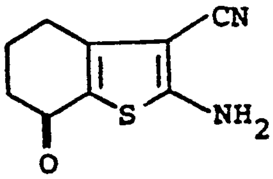

Amin 17

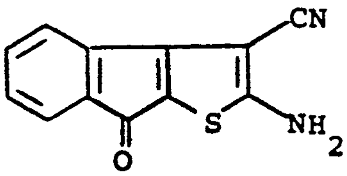

Amin 18

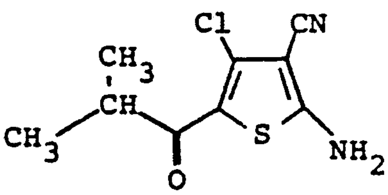

Amin 19

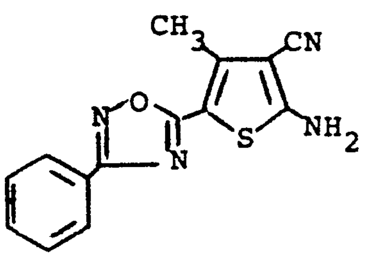

**Amin 20**

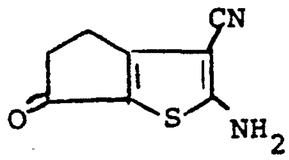

**Amin 21**

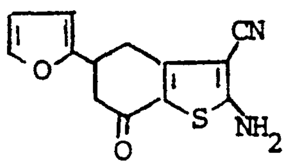

**Amin 22**

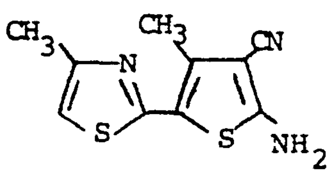

Den Verbindungen der Formel V liegen bekannte Kupplungskomponenten aus der Chemie der 1-Naphthole oder 1-Naphthylamine zugrunde, die durch geeignete Umsetzungen z.B. über die Sulfochloride oder Carbonsäurechloride, weiterhin über Halogenierungs-und/oder Bucherer-Reaktionen in die eigentlichen Kupplungskomponenten umgewandelt werden.

Als Ausgangsmaterialien für diese Synthesen dienen z.B.

1-Naphtholsulfonsäure-2
1-Naphtholsulfonsäure-3
1-Naphtholsulfonsäure-6
1-Naphthylaminsulfonsäure-6,
aus der durch Chlorierung im Zug einer Bucherer-Synthese 2-Chlor-1-naphtholsulfonsäure-6 erhalten werden kann,
1-Naphtholsulfonsäure-8
1-Naphthionsäure
7-Acetylamino-1-naphthol-3-sulfonsäure
8-Acetylamino-2-chlor-1-naphthol-5-sulfonsäure
5-Amino-1-naphthol-2-sulfonsäure
5-Aminonaphthol-1
8-Acetylamino-1-naphthol-2,5-disulfonsäure
5-Acetylamino-1-naphthol-3-sulfonsäure.

Im Zug der Synthese können bei Vorliegen von 2-Sulfogruppen entweder beide Sulfogruppen gemeinsam in ein Disulfochlorid umgewandelt und zu Sulfonamiden mit gleichem oder ungleichem Sulfonamidteil übergeführt werden oder die Umsetzung kann stufenweise erfolgen.

Weitere Naphthole, die sich als Bausteine zur Synthese entsprechender Farbstoffe eignen, sind

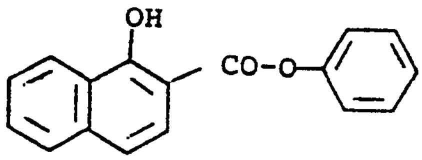

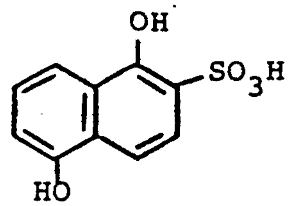

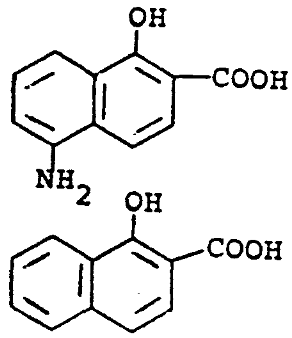

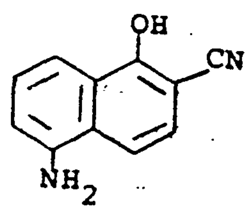

Für die Verknüpfung mit dem diffusionsfest machenden Trägerrest vorgesehene Gruppen können dabei durch nachträgliche Sulfinierung oder direkte Sulfochloridsynthese eingeführt werden.

Die entsprechenden Umsetzungen sind bekannt und bedürfen keiner detaillierten Erläuterung.

Erfindungsgemäße Farbabspalter der allgemeinen Formel III sind nachstehend in einer beispielhaften Übersicht zusammengefaßt.

$CAR^{I}$ =

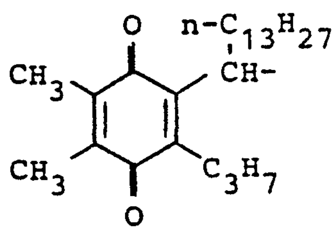

$CAR^{II}$ =

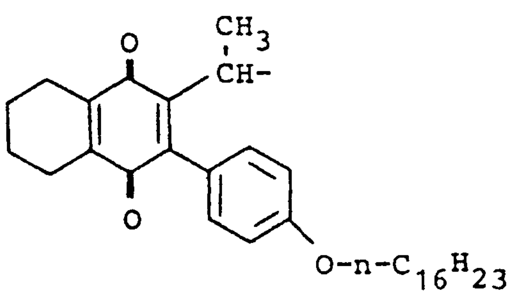

$CAR^{III}$ =

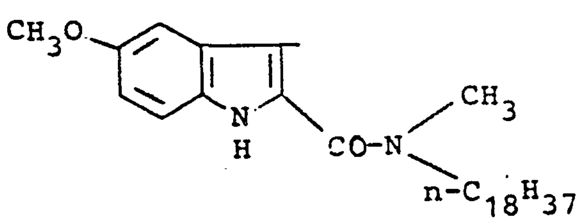

**Farbabspalter 1**

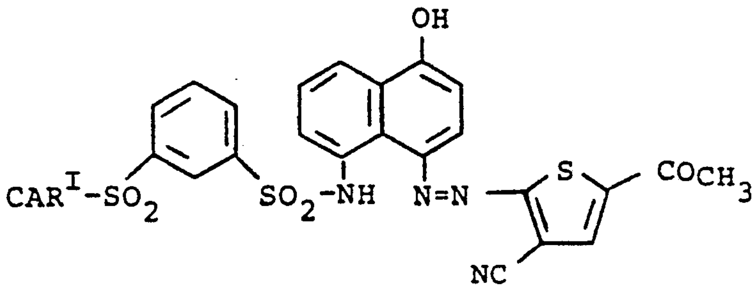

**Farbabspalter 2**

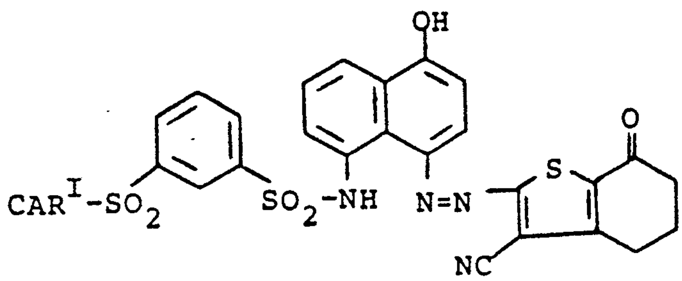

**Farbabspalter 3**

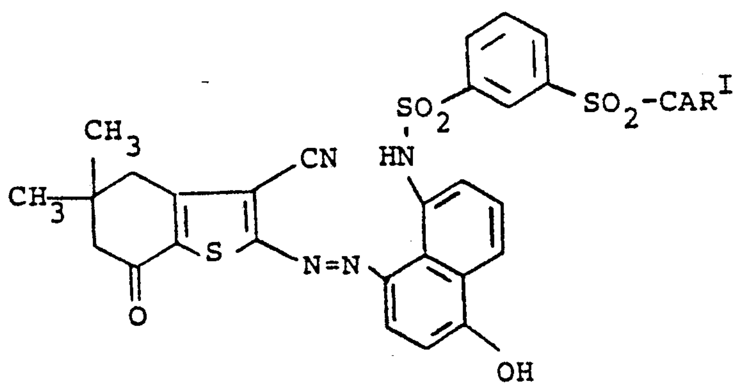

**Farbabspalter 4**

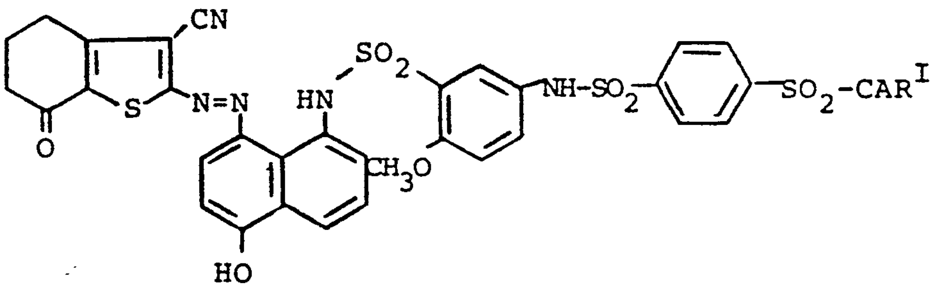

**Farbabspalter 5**

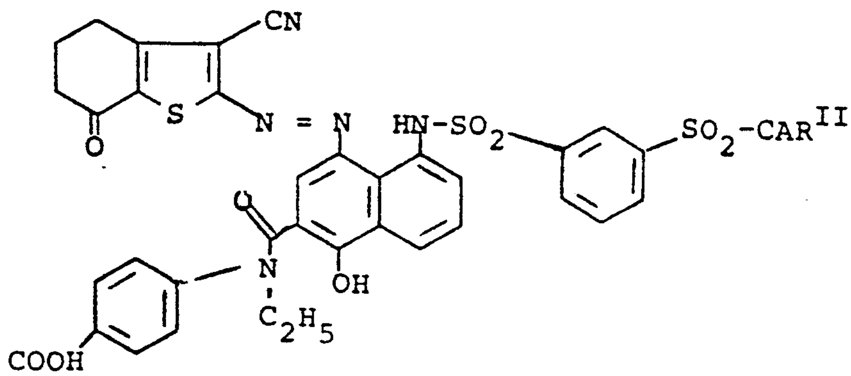

**Farbabspalter 6**

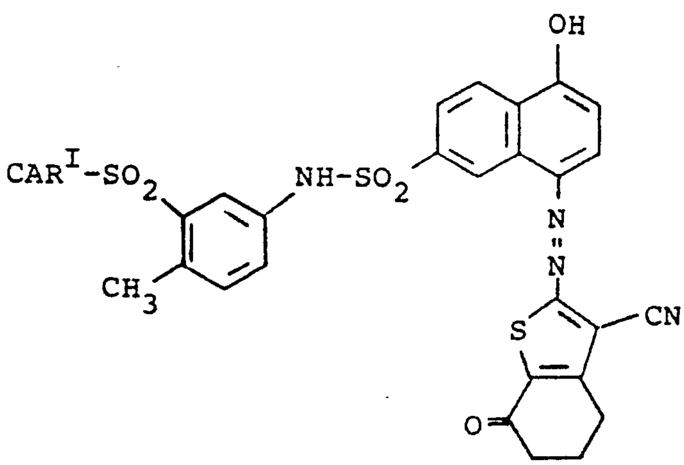

**Farbabspalter 7**

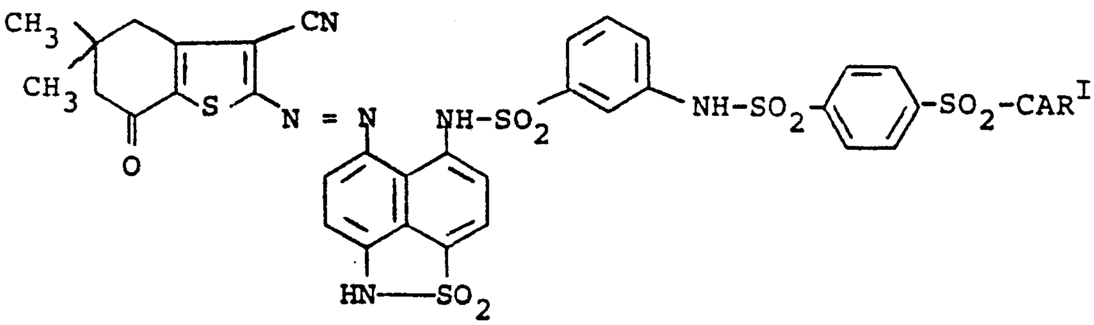

**Farbabspalter 8**

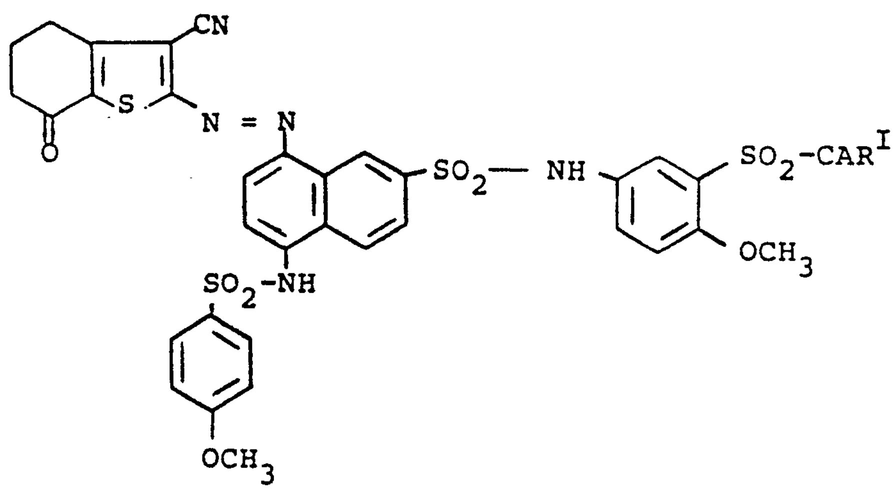

**Farbabspalter 9**

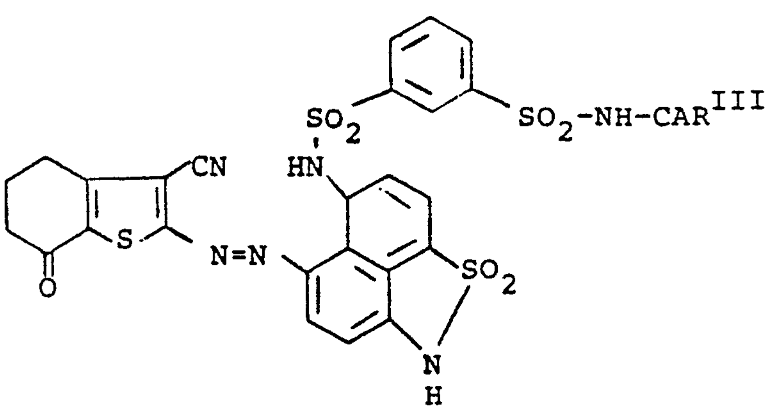

**Farbabspalter 10**

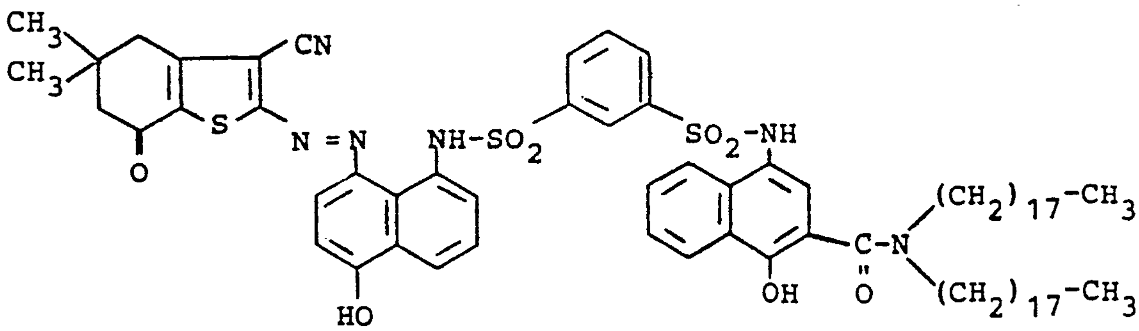

**Farbabspalter 11**

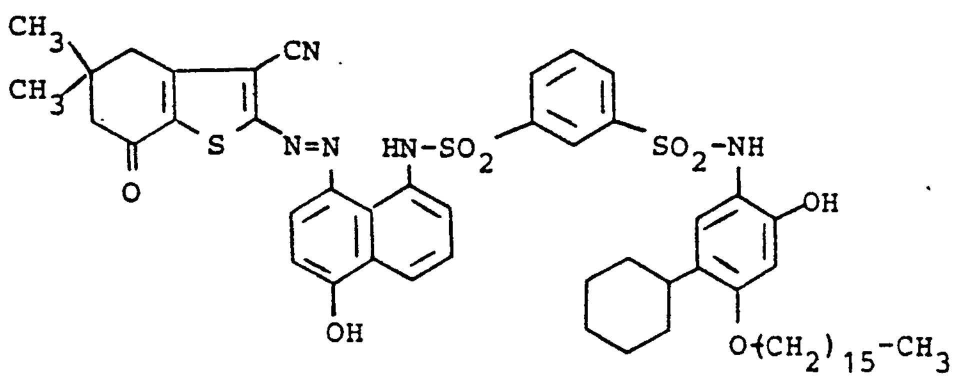

**Farbabspalter 12**

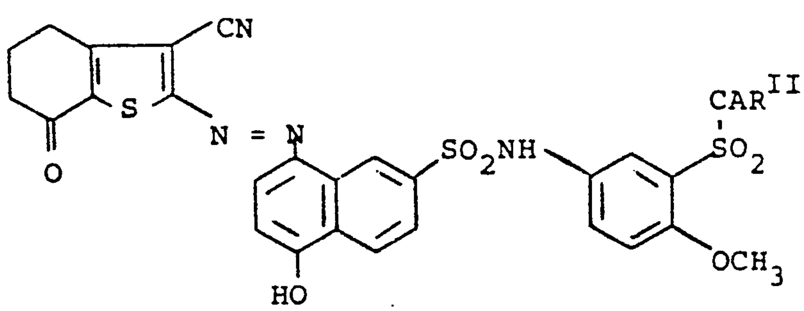

**Farbabspalter 13**

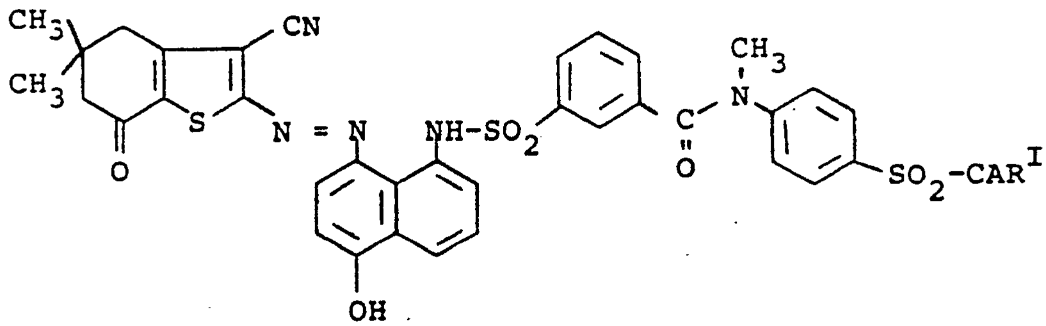

**Farabaspalter 14**

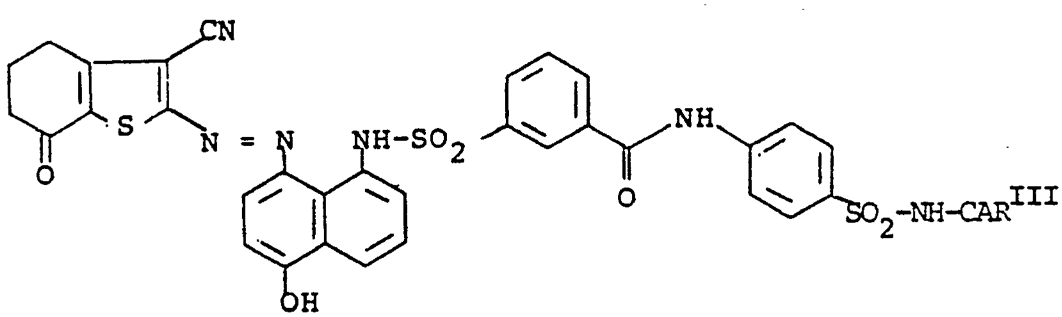

**Farbabspalter 15**

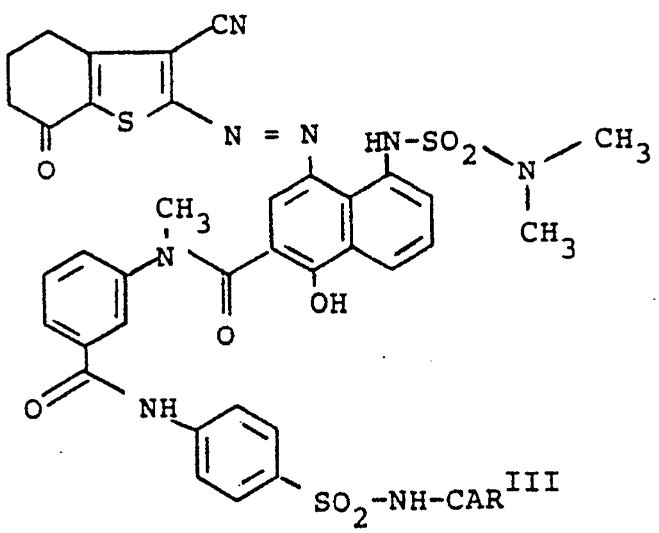

**Farbabspalter 16**

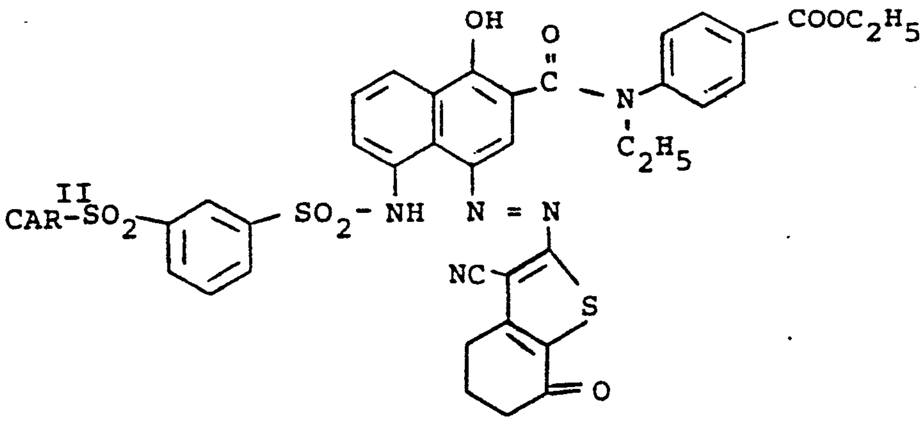

**Farbabspalter 17**

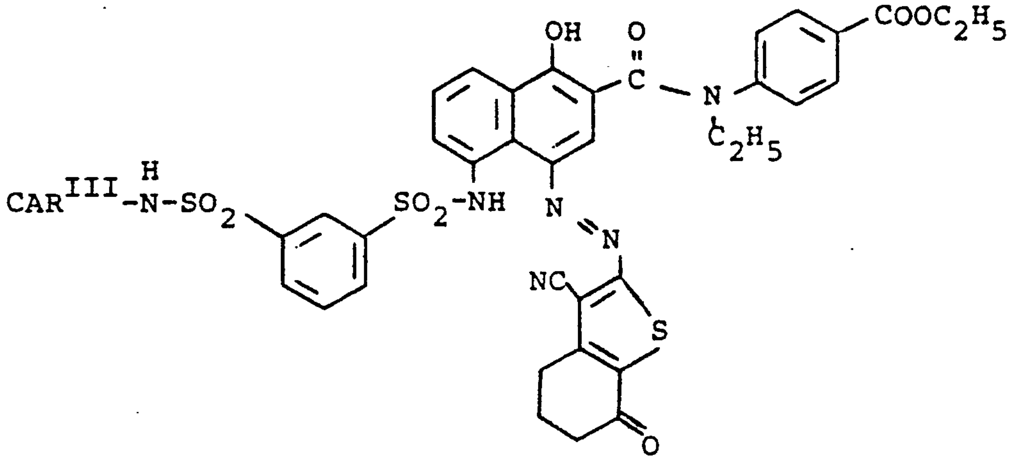

**Farbabspalter 18**

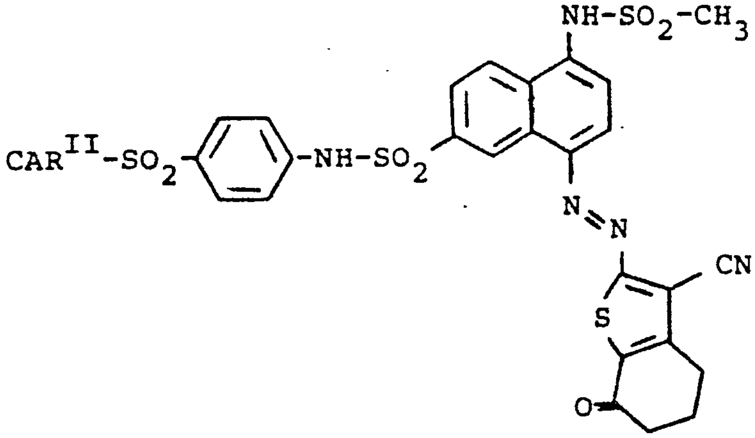

**Farbabspalter 19**

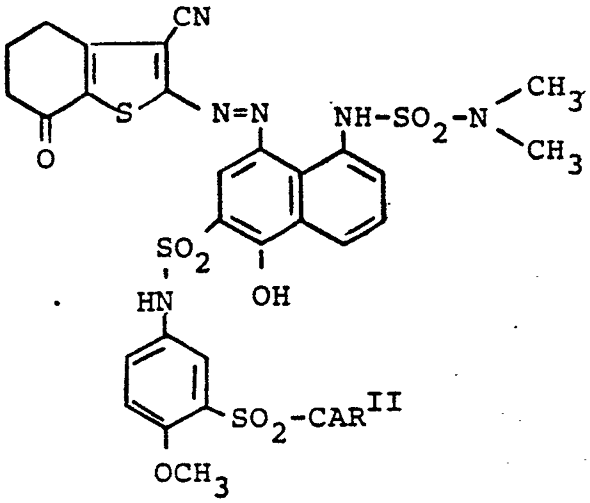

**Farbabspalter 20**

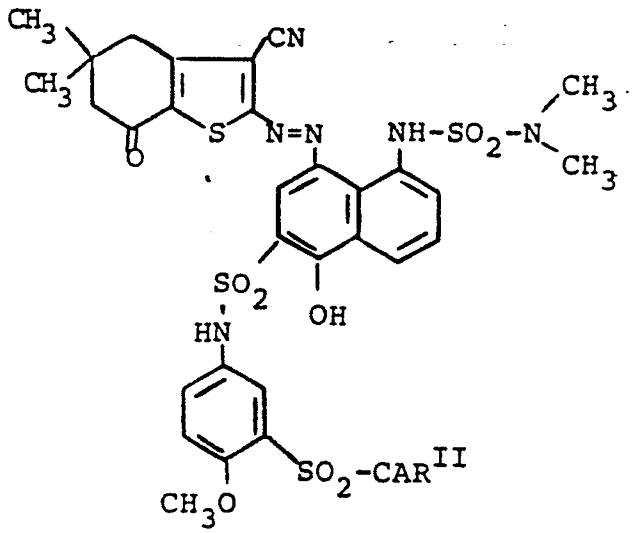

**Farbabspalter 21**

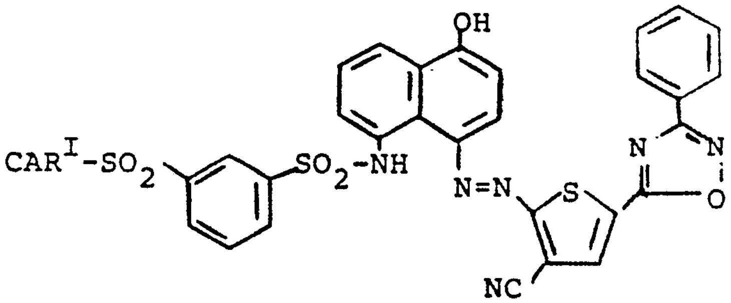

**Farbabspalter 22**

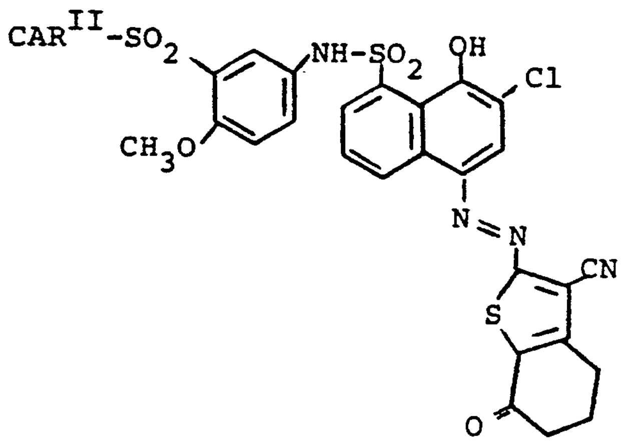

**Farbabspalter 23**

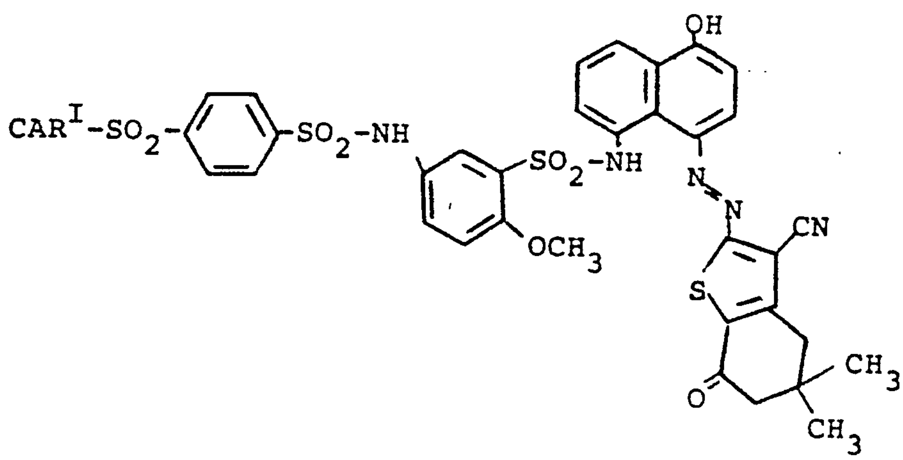

**Farbabspalter 24**

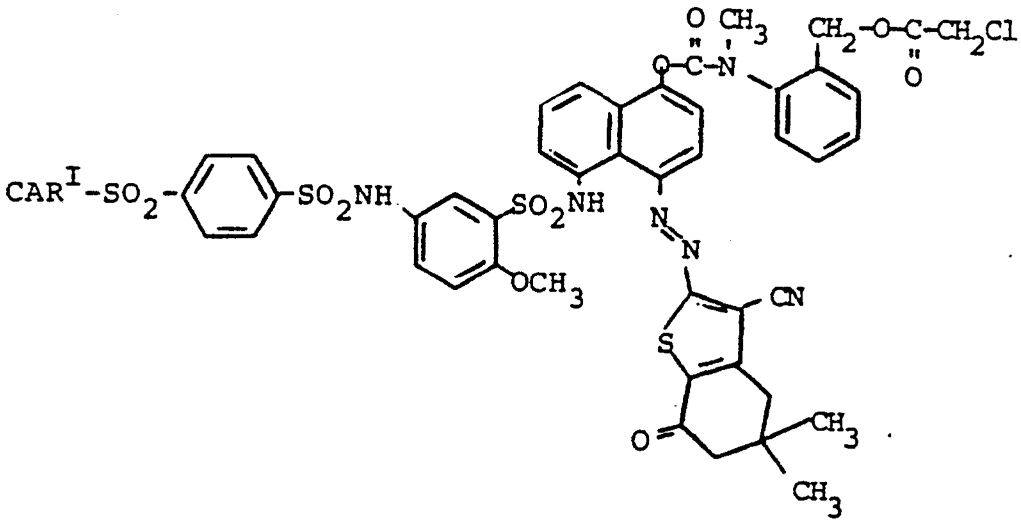

**Herstellungsbeispiele**

**Farbabspalter 2**

**Vorstufe 2.1**

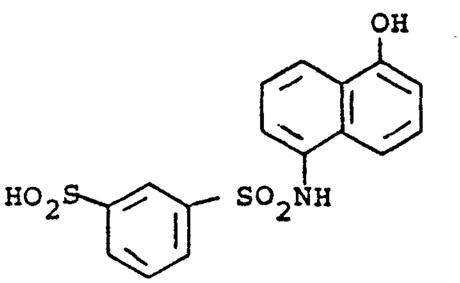

:IG107/45

**3-(5-Hydroxy-1-naphthylamido-sulfonyl)-benzolsulfinsäure:**

Man erhitzt 38,1 g 5-(m-Fluorsulfonyl)-benzolsulfonamido-1-naphthol (0,1 Mol) in 400 ml Wasser und 15 ml Hydrazinhydrat über 6 h bei 70°C filtriert nach Zugabe von 20 g Aktivkohle, kühlt auf 15°C und gibt 100 g Natriumchlorid zu. Das ausgefallene Na-Salz wird in wenig Wasser aufgenommen und durch Zugabe von 10 ml Schwefelsäure und 10 ml Wasser in die freie Säure übergeführt. Ausbeute 19,9 g (55 % der Theorie).

**Vorstufe 2.2**

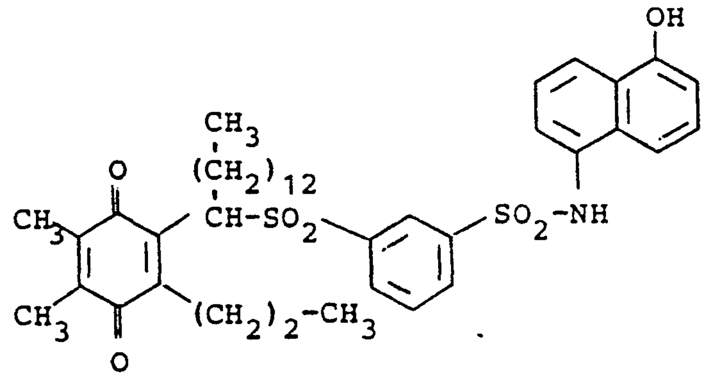

Man verrührt 19,6 g (0,05 Mol) 2,3-Dimethyl-5-propyl-6-(α -hydroxy)-tetradecylhydrochinon, dessen Herstellung auf Seite 30 der DE-A-28 54 946 beschrieben ist, und 18,2 g (0,055 Mol) Vorstufe 2.1 in 150 ml Essigsäure und 15 ml Wasser, erhitzt auf 70° C und hält das Gemisch 4 h auf 70° C. Nach Zugabe von 30 g Eisen-III-chloridhexahydrat und weiteren 75 ml Essigsäure wird 1 h auf 50° C erhitzt und nach Abkühlung auf 15° C bis zur beendeten Kristallisation gerührt. Man saugt ab, wäscht mit 100 ml Essigsäure und 500 ml Wasser und trocknet an der Luft. Man erhält 29,5 g (80 % der Theorie) eines gelben Pulvers.

**Vorstufe 2.3**

**2-Amino-3-cyano-7-oxo-4,5,6,7-tetrahydrobenzothiophen**
(Amin 6)

16 Teile (Dicyanomethylen)-3-hydroxy-1-cyclohexen und 3,2 Teile Schwefel werden in 80 Teilen Ethanol vorgelegt. Nach Zugabe von 20 Teilen Triethylamin wird das Reaktionsgemisch 2 h am Rückfluß gekocht. Man engt am Rotationsverdampfer zur Trockne ein, verrührt den Rückstand mit einer Mischung aus 100 Teilen Wasser und 30 Teilen Natriumhydrogensulfidlösung. Nach Isolieren, Waschen und Trocknen erhält man 10 Teile Amin 6.

**Farbabspalter 2**

(Diazotierung und Azokupplung):

Man suspendiert 9,6 g (0,05 Mol) Amin 6 in 96 ml eines Gemisches von Essigsäure und Propionsäure im Volumenverhältnis 1:1, gibt unter Eiskühlung 2 ml 96 %iger $H_2SO_4$ zu und diszotiert bei -5° C mit 8,8 ml 42 %iger Nitrosylschwefelsäure. Man rührt 3 h bei -5° C nach, gibt 0,2 g Harnstoff nach und trägt die Diazolösung unter Rühren bei 0° C in eine Lösung von 36,8 g Vorstufe 2.2 in 370 ml Methanol ein, der 0,2 ml 96 %ige Schwefelsäure zugegeben wurden. Man läßt die blaugefärbte Suspension unter Eiskühlung über 6 h auskuppeln, dekantiert vom schmierigen Rohprodukt und verrührt dieses mit Eiswasser. Nach beendeter Kristallisation wird abgesaugt, an der Luft getrocknet und nach Aufnahme in 250 ml Dichlormethan über 500 g Kieselgel 60 (mittl. Korngröße 63 μm) mit Dichlormethan unter Zugabe von steigenden Anteilen Methanol chromatographiert. Man erhält 15 g chromatographisch einheitliches blauschwarzes Pulver durch Eindampfen der Mittelfraktionen.

**Farbabspalter 3**

Man verfährt wie bei Farbabspalter 2, jedoch mit dem Unterschied, daß als Diazokomponente 2-Amino-3-cyan-5,5-dimethyl-7-oxo-4,5,6,7-tetrahydrobenzo[b]thiophen eingesetzt wird.
Die Herstellung der Diazokomponente ist in der genannten EP-A-0 146 797 beschrieben.

**Farbabspalter 6**

**Vorstufe 6.1**

Na-1-acetoxynaphthalin-6-sulfonat

Man hält

| | |
|---|---|
| 120 g | (0,5 mol) Ammonium-1-naphthol-6-sulfonat und |
| 41 g | (0,5 mol) Na-acetat in |
| 600 g | Essigsäure und |
| 600 ml | Acetanhydrid |
| | 2 h unter Rückfluß, saugt nach Abkühlen auf 40° C ab, wäscht mit Ethylacetat und trocknet. Ausbeute 142 g. |

**Vorstufe 6.2**

1-Acetoxynaphthalin-6-sulfochlorid

Man trägt in

| | |
|---|---|
| 69 g | Vorstufe 6.1 bei 50° C |
| 50 g | Phosphorpentachlorid ein und rührt 1 h bei 60° C nach. Die flüssige Mischung wird in |
| 500 g | Eis eingetragen und bis zur Beendigung der Gasentwicklung gerührt. Man extrahiert dreimal mit je |
| 200 ml | Chloroform, trocknet die neutral gewaschene Chlorformphase mit Natriumsulfat und engt ein. |

**Vorstufe 6.3**

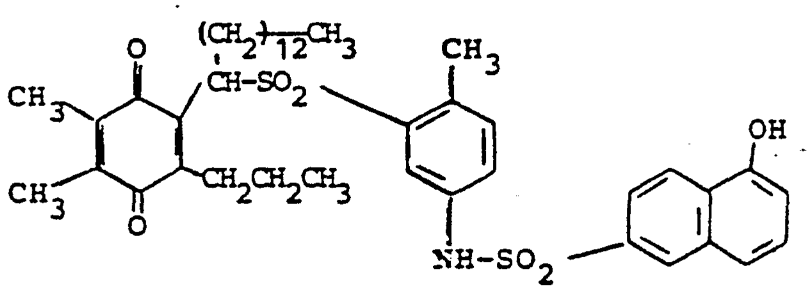

Das Ausgangsamin (Carrieramin) wird nach den Angaben der DE-A-31 07 540, Seiten 45-46 hergestellt: 2,3-Dimethyl-5-propyl-6-[α-(2-methyl-5-aminophenyl)-sulfonyl]-tetradecylbenzochinon-1,4.

Man legt

| | |
|---|---|
| 54,3 g | (100 mmol) Carrieramin in |
| 500 ml | Chloroform vor, gibt 40 ml Pyridin zu und trägt bei 25° C eine Lösung von |
| 28,8 g | (115 mmol) Vorstufe 6.2 in |
| 300 ml | Chloroform ein. Man rührt bei 20-25° C 2 h nach, engt ein und verrührt den Rückstand mit 500 ml Wasser. Man nimmt den kristallisierten Rückstand nach Absaugen vom Wasser in 650 ml Ethanol auf und hält 1 h mit 100 ml konzentrierter Salzsäure unter Rückfluß. Man engt erneut ein, verrührt mehrmals mit Wasser, dekantiert ab und kocht mit Methanol aus (300 ml). Beim Erkalten fällt das Produkt aus. Ausbeute 64 g (88 % d.Theorie). |

**Farbabspalter 6**

Man diazotiert

| | |
|---|---|
| 6,6 g | (30 mmol) Amin 6 in |
| 60 ml | Orthophosphorsäure und |
| 60 ml | Gemisch Propionsäure/Essigsäure 3:1 bei -10° C mit |
| 6 ml | 40 %iger Nitrosylschwefelsäure wie bei Farbstoff 8 beschrieben |
| | und tropft die von überschüssiger salpetriger Säure befreite |

Diazoniumlösung bei -10° C bis -5° C in eine auf -10° C gehaltene Lösung von

| | |
|---|---|
| 21,7 g | (30 mmol) Vorstufe 6.3 in einem Gemisch von |
| 200 ml | Propionsäure, |
| 200 ml | Essigsäure und |
| 50 ml | Ethanol. |
| | Man läßt über 3 h bei -10° C bis 0° C auskuppeln und trägt auf |
| 1000 g | Eis aus. Man rührt 20 min nach, dekantiert, wäscht mit je 200 ml Eiswasser 3 mal nach, wobei das Produkt fest wird, saugt ab, trocknet über 24 h an der Luft und reinigt durch Säulenchromatographie auf 1000 g Kieselgel Woelm (32-63 µm) mit Dichlormethan/Methanol 98:2 als Laufmittel. Aus dem Eluat erhält man nach Eindampfen |
| 12,4 g | chromatographisch einheitliche Substanz in Form eines dunkelroten Pulvers. |

Die erfindungsgemäßen Farbabspalter werden beim Farbdiffusionsübertragungsverfahren in Zuordnung zu einer li einem farbfotografischen Aufzeichnungsmaterial einverleibt. Bei monochromatischen Verfahren enthält ein solches Aufzeichnungsmaterial mindestens eine, bei Verfahren zur Herstellung mehrfarbiger Bilder in der Regel mindestens drei lichtempfindliche Silberhalogenidemulsionsschichten, im letzteren Fall mit unterschiedlicher spektraler Empfindlichkeit, wobei erfindungsgemäß mindestens einer dieser Schichten ein Farbabspalter gemäß Formel III zugeordnet ist. Die Farbabspalter der vorliegenden Erfindung liefern bei der Entwicklung diffusionsfähige blaugrüne Farbstoffe mit hervorragender Lichtechtheit, verbesserten spektralen Eigenschaften und verminderter Empfindlichkeit gegen Reduktionsmittel. Sie sind daher bevorzugt einer rotempfindlichen Silberhalogenidemulsionsschicht zugeordnet.

Unter "Zuordnung" und "zugeordnet" wird verstanden, daß die gegenseitige Anordnung von lichtempfindlicher Silberhalogenidemulsionsschicht und Farbabspalter von solcher Art ist, daß bei der Entwicklung eine Wechselwirkung zwischen ihnen möglich ist, die eine Freisetzung des diffusionsfähigen Azofarbstoffes als Funktion der Entwicklung der Silberhalogenidemulsionsschicht zuläßt.

Hierzu müssen das lichtempfindliche Silberhalogenid und der Farbabspalter nicht notwendigerweise in derselben Schicht vorliegen; sie können auch in benachbarten Schichten untergebracht sein, die jeweils der gleichen Schichteinheit angehören.

Falls es sich bei den erfindungsgemäßen Farbabspaltern um reduzierbare, reduktiv spaltbare Verbindungen handelt, die zweckmäßig gemeinsam mit ED-Verbindungen (oder deren Vorläufer, z.B. gemäß DE-A-30 06 268) verwendet werden, ist unter Zuordnung zu verstehen, daß die gegenseitige Anordnung von Silberhalogenidemulsion, ED-Verbindung bzw. ED-Vorläuferverbindung und Farbabspalter von solcher Art ist, daß eine Wechselwirkung zwischen ihnen möglich ist, die eine bildmäßige Übereinstimmung zwischen dem gebildeten Silberbild und dem Verbrauch an ED-Verbindung einerseits sowie zwischen der nicht verbrauchten ED-Verbindung und dem Farbabspalter andererseits zuläßt, so daß in Übereinstimmung mit dem nicht entwickelten Silberhalogenid eine bildweise Verteilung von diffusionsfähigem Farbstoff erzeugt wird.

Obwohl für die Einarbeitung der erfindungsgemäßen Farbabspalter die verschiedensten Methoden in Frage kommen, hat es sich als günstig erwiesen, die Farbabspalter der vorliegenden Erfindung in Form von Emulgaten unter Verwendung von sogenannten Ölbildnern in die Schichten einzuverleiben. Insbesondere bei Verwendung von reduzierbaren, reduktiv spaltbaren Farbabspaltern in Kombination mit ED-Verbindungen bietet dies den Vorteil, daß Farbabspalter und ED-Verbindungen in Form eines gemeinsamen Emulgates in besonders engen funktionellen Kontakt gebracht werden können. Geeignete Ölbildner sind beispielsweise beschrieben in US-A-2 322 027, DE-A-1 772 192, DE-A-2 042 659 und DE-A-2 049 689. Die optimalen Mengen des einzuarbeitenden Farbabspalters und gegebenenfalls der ED-Verbindung können durch einfache routinemäßige Tests ermittelt werden. Der Farbabspalter der vorliegenden Erfindung wird beispielsweise in Mengen von 0,05 - 0,2 Mol und die ED-Verbindung, falls vorhanden, in Mengen von 0,1 - 0,6 Mol pro Mol Silberhalogenid verwendet.

Die Entwicklung des bildmäßig belichteten erfindungsgemäßen farbfotografischen Aufzeichnungsmaterials wird durch Behandlung mit einer wäßrig-alkalischen, gegebenenfalls hochviskosen Entwicklerlösung eingeleitet. Die für die Entwicklung erforderlichen Hilfsentwicklerverbindungen sind entweder in der Entwicklerlösung enthalten oder können ganz oder teilweise auch in einer oder mehreren Schichten des erfindungsgemäßen farbfotografischen Aufzeichnungsmaterials enthalten sein. Bei der Entwicklung werden aus den Farbabspaltern bildmäßig diffusionsfähige Farbstoffe freigesetzt und auf eine Bildempfangsschicht übertragen, die entweder integraler Bestandteil des erfindungsgemäßen farbfotografischen Aufzeichnungsmaterials ist oder sich mit jenem zumindest während der Entwicklungszeit in Kontakt befindet. Die Bildempfangsschicht kann demnach auf dem gleichen Schichtträger angeordnet sein wie das lichtempfindliche Element oder auf einem separaten Schichtträger. Sie besteht im wesentlichen aus einem Bindemittel, das Beizmittel für die Festlegung der aus den nicht-diffundierenden Farbabspaltern freigesetzten diffusionsfähigen Farbstoffe enthält. Als Beizmittel für anionische Farbstoffe dienen vorzugsweise langkettige quaternäre Ammonium- oder Phosphoniumverbindungen, z.B. solche, wie sie beschrieben sind in US-A-3 271 147 und US-A-3 271 148. Ferner können auch bestimmte Metallsalze und deren Hydroxide, die mit den sauren

Farbstoffen schwerlösliche Verbindungen bilden, verwandt werden. Weiterhin sind hier auch polymere Beizmittel zu erwähnen, wie etwa solche, die in DE-A-23 15 304, DE-A-26 31 521 oder DE-A-29 41 818 beschrieben sind. Die Farbstoffbeizmittel sind in der Beizmittelschicht in einem der üblichen hydrophilen Bindemittel dispergiert, z.B. in Gelatine, Polyvinylpyrrolidon, ganz oder partiell hydrolysierten Celluloseestern. Selbstverständlich können auch manche Bindemittel als Beizmittel fungieren, z.B. Polymerisate von stickstoffhaltigen, gegebenenfalls quaternären Basen, wie etwa von N-Methyl-4-Vinylpyridin, 4-Vinylpyridin, 1-Vinylimidazol, wie beispielsweise beschrieben in US-A- 2 484 430. Weitere brauchbare beizende Bindemittel sind beispielsweise Guanylhydrazonderivate von Alkylvinylketonpolymerisaten, wie beispielsweise beschrieben in der US-A-2 882 156, oder Guanylhydrazonderivate von Acylstyrol-polymerisaten, wie beispielsweise beschrieben in DE-A-20 09 498. Im allgemeinen wird man jedoch den zuletzt genannten beizenden Bindemitteln andere Bindemittel, z.B. Gelatine, zusetzen.

Sofern die Bildempfangsschicht auch nach vollendeter Entwicklung in Schichtkontakt mit dem lichtempfindlichen Element verbleibt, befindet sich zwischen ihnen in der Regel eine alkalidurchlässige pigmenthaltige lichtreflektierende Bindemittelschicht, die der optischen Trennung zwischen Negativ und Positiv und als ästhetisch ansprechender Bildhintergrund für das übertragene Farbbild dient. Eine solche lichtreflektierende Schicht kann in bekannter Weise bereits in dem lichtempfindlichen farbfotografischen Aufzeichnungsmaterial vorgebildet sein oder aber in ebenfalls bekannter Weise erst bei der Entwicklung erzeugt werden. Falls die Bildempfangsschicht zwischen Schichtträger und lichtempfindlichem Element angeordnet ist und von letzterem durch eine vorgebildete lichtreflektierende Schicht getrennt ist, muß entweder der Schichtträger transparent sein, so daß das erzeugte Farbübertragsbild durch ihn hindurch betrachtet werden kann, oder das lichtempfindliche Element muß mitsamt der lichtreflektierenden Schicht von der Bildempfangsschicht entfernt werden, um letztere freizulegen. Die Bildempfangsschicht kann aber auch als oberste Schicht in einem integralen farbfotografischen Aufzeichnungsmaterial vorhanden sein, in welch letzterem Fall die Belichtung zweckmäßigerweise durch den transparenten Schichtträger vorgenommen wird.

Nach der Verarbeitung enthält die Bildempfangsschicht eine bildmäßige Verteilung von blaugrünen Monoazofarbstoffen der Formel I. Auch der zu der ursprünglich lichtempfindlichen Silberhalogenidemulsionsschicht zugeordnete Farbabspalter der Formel III liegt nach der Verarbeitung in bildmäßiger Verteilung komplementär zu dem übertragenen Farbstoffbild vor und kann in bekannter Weise ebenfalls als Farbbild nutzbar gemacht werden (retained image).

**Beispiel 1**

**Bildempfangsblatt 1**

Auf einen beidseitig mit Polyethylen beschichteten und mit einer Haftschicht versehenen Papierträger wurden folgende Schichten aufgetragen. Die Angaben beziehen sich auf 1 $m^2$.

1. Eine Beizschicht mit 6 g Beizmittel A und 5 g Gelatine.
2. Eine Härtungsschicht mit 0,1 g Gelatine und 0,15 g Härtungsmittel H.

Je 1 Streifen des erhaltenen Bildempfangsmaterials wurden in eine 0,025-molare mit 2 % Natriumhydroxid alkalisch eingestellte Farbstofflösung eingetaucht und zu einer Dichte von 1,2 - 1,5 (gemessen am Reflektionsdensitometer RD 514 / Macbeth hinter Rotfilter eingefärbt.

Es wurden folgende Farbstoffe verwendet:

Farbstoffe 1, 2, 3, 4, 12, 13, 17, 23, 25, 31 (gemäß der Erfindung) und zum Vergleich der nicht erfindungsgemäße Farbstoff B.

Nach beendeter Tauchbehandlung werden die Proben mit demineralisiertem Wasser gespült und getrocknet.

In der nachstehenden Tabelle 1 sind die Ergebnisse der spektralen Messungen zusammengefaßt.

Aus den Daten ist zu erkennen, daß die erfindungsgemäßen Farbstoffe in ihren spektralen Daten dem vergleichbaren Farbstoff des Standes der Technik insgesamt überlegen sind.

Insbesondere sind die Nebendichten hinter Grünfilter, gemessen am Macbeth Reflektionsdensitometer RD-514, deutlich niedriger als die des Farbstoffes B. Durch den Wegfall des Purpuranteils wirken die Farbstoffe insgesamt grüner.

In der letzten Spalte ist die prozentuale Farbdichteänderung bei Bestrahlung mit Xenonlicht $4{,}8.10^6$ 1x.h angegeben.

In der vorletzten Spalte sind Meßwerte oberhalb 720 nm wegen apparativer Unsicherheiten nicht angegeben.

**Tabelle 1**

| Farbstoff | Nebendichten hinter Blaufilter [%] | Grünfilter [%] | λmax [nm] | Halbband breite [nm]* | $\frac{\Delta D}{D_0}$ |
|---|---|---|---|---|---|
| B | 17 | 30 | 640 | 565 - 685 | -93 % |
| 1 | 20 | 26 | | | |
| 2 | 19 | 24 | 660 | 566- | -86 % |
| 3 | 18 | 28 | 665 | 560- | -81 % |
| 4 | 13 | 23 | 644 | 568 - 720 | -89 % |
| 12 | 16 | 38 | 640 | 550 - 706 | -68 % |
| 13 | 15 | 30 | 645 | 560- | -64 % |
| 17 | 15 | 25 | 650 | 560 - 710 | -81 % |
| 23 | 16 | 26 | 648 | 572 - 720 | -91 % |
| 25 | 16 | 24 | 650 | 562 - 710 | -95 % |
| 31 | 19 | 35 | 638 | 550- | -96 % |

**Beispiel 2**

Beispiel 1 wird wiederholt, jedoch unter Verwendung von

**Bildempfangsblatt 2:**

1. Beizschicht mit
   - 4 g eines zu 10 mol-% mit Chlorethanol quaternierten Polyvinylimidazols (vgl. Research Disclosure No. 22 040),
   - 5 g Gelatine und
   - 0,02 g Saponin.
2. Härtungsschicht wie in Beispiel 1.

Es wurden folgende Farbstoffe verwendet:
Farbstoff B (nicht erfindungsgemäß)
Farbstoffe 1, 2, 3, 4, 12, 17, 23, 25, 31, (erfindungsgemäß).
Die Prüfung erfolgte nach der in Beispiel 1 angegebenen Methode.

**Tabelle 2**

| Farbstoff | Nebendichten hinter Blaufilter [%] | Grünfilter [%] | λmax [nm] | Halaband breite [nm] | $\frac{\Delta D}{D_0}$ |
|---|---|---|---|---|---|
| B | 18 | 30 | 645 | 567 - 688 | -20 % |
| 1 | 18 | 28 | 660 | 560 - 700 | -20 % |
| 2 | 19 | 24 | 665 | 566- | -28 % |
| 3 | 18 | 28 | 655 | 565- | -22 % |
| 4 | 13 | 22 | 640 | 562 - 718 | -22 % |
| 12 | 14 | 28 | 664 | 560 - 712 | -10 % |
| 17 | 17 | 26 | 668 | 556 - 712 | -16 % |
| 23 | 17 | 27 | 644 | 570 - 716 | -24 % |
| 25 | 16 | 25 | - | - | -38 % |
| 31 | 18 | 37 | - | - | -32 % |

Die Ergebnisse von Beispiel 2 zeigen, daß auf der von vorneherein im Lichtechtheitsniveau günstigeren Bildempfangsschicht 2 im allgemeinen gleichwertige, zum Teil jedoch günstigere Lichtechtheiten erzielt werden, wenn anstelle von Blaugrünfarbstoffen des Standes der Technik (Farbstoff B) die erfindungsgemäßen Acylthienylazonaphthole eingesetzt werden.

**Beispiel 3**

Ein lichtempfindliches Element eines fotografischen Aufzeichnungsmaterials wurde hergestellt, indem auf einem transparenten Träger aus Polyethylenterephthalat folgende Schichten nacheinander aufgetragen wurden. Die Mengenangaben beziehen sich dabei jeweils auf 1 $m^2$.

Material I (nicht erfindungsgemäß)
1. Blausensibilisierte Schicht mit einer Silberchloridbromidiodid-Emulsion (Silberauftrag 0,5 g Ag), 1,4 g Gelatine, 0,3 g Farbabspalter C (gelb) und 0,25 g ED-Verbindung F.
2. Zwischenschicht aus 0,8 g Colanyl-Gelb HR Dispergat (Fa. Hoechst), 0,1 g ED-Verbindung F und 0,8 g Gelatine.
3. Grünsensibilisierte Schicht mit 0,36 g einer Silberchloridbromidiodid-Emulsion (Silberauftrag 0,36 g Ag), 0,92 g Gelatine, 0,18 g Farbabspalter D (purpur) und 0,14 g ED-Verbindung F.
4. Zwischenschicht aus 0,6 g Entwicklerverbindung G, 0,1 g ED-Verbindung F und 1,36 g Gelatine.
5. Rotsensibilisierte Schicht mit einer Silberchloridbromidiodid-Emulsion (Silberauftrag 0,33 g Ag), 1,0 g Gelatine, 0,23 g Farbabspalter E (blaugrün) und 0,11 g ED-Verbindung F.
6. Zwischenschicht aus 0,05 g Entwicklerverbindung G und 0,39 g Gelatine.
7. Weiße Pigmentschicht aus 16,0 g $TiO_2$ und 2,3 g Gelatine.
8. Zwischenschicht aus 0,2 g Diisooctylhydrochinon und 4,0 g Gelatine.
9. Beizschicht mit 4,5 g eines zu 20 mol-% mit Chlorethanol quaternierten Polyvinylimidazols und 5,2 g Gelatine.
10. Härtungsschicht mit 1,2 g Härtungsmittel H und 0,6 g Gelatine.

In gleicher Weise wurden erfindungsgemäße Materialien hergestellt, die sich von Material I dadurch unterschieden, daß die rotsensibilisierte Schicht (Schicht 5) anstelle des Farbabspalters E einen Farbabspalter der vorliegenden Erfindung enthielt, und zwar

| | | |
|---|---|---|
| Material II | 0,23 g | Farbabspalter 2 |
| Material III | 0,20 g | Farbabspalter 3 |
| Material I | 0,27 g | Farbabspalter 4 |
| Material V | 0,28 g | Farbabspalter 23 |
| Material VI | 0,22 g | Farbabspalter 6 |

Für die Entwicklung wurde folgender Aktivator eingesetzt:

| | |
|---|---|
| Kaliumhydroxid | 40 g |
| Kaliumbromid | 3 g |
| 2,2-Methylpropyl-1,3-propandiol | 25 g |
| 1,4-Cyclohexandimethanol (50 %) | 20 g |
| Wasser | 912 g |

Die Materialien wurden hinter einem Graukeil belichtet, anschließend 2 min in dem angegebenen Aktivator entwickelt, 5 min gewässert und getrocknet. An den verarbeiteten Materialien wurden durch Messung hinter Rotfilter die Dmin- und Dmax-Werte sowie Lichtechtheit (Xenotestgerät - $7{,}2.10^6$ 1x.h) und Darkfading (100 h Lagerung bei 35° C und 90 % rel. Feuchte) ermittelt (Tabelle 3).

**Tabelle 3**

| Material | $D_{max}$ | $D_{min}$ | Nebendichten hinter Blaufilter [%] | Nebendichten hinter Grünfilter [%] | Lichtechtheit $\frac{\Delta D}{D}$ (7,2.10^6 lx.h) bei D = 0,6 | Lichtechtheit bei D = 1,2 | λ max [nm] | Darkfading $\frac{D}{D}$ (100 h; 35° C; 90% r.F) |
|---|---|---|---|---|---|---|---|---|
| I | 1,96 | 0,12 | 25 | 41 | −14% | −12% | 640 | −15 % |
| II | 1,61 | 0,13 | 22 | 39 | | | 644 | |
| III | 2,04 | 0,12 | 23 | 38 | − 5% | − 9% | 648 | ±0 |
| IV | 1,90 | 0,13 | 18 | 33 | | | 648 | |
| V | 2,26 | 0,12 | 18 | 33 | − 6% | − 8% | 650 | |
| VI | 2,32 | 0,15 | 22 | 38 | | | 644 | ±0 |

Aus Tabelle 3 ist ersichtlich, daß bei Verwendung der erfindungsgemäßen Farbabspalter die Lichtechtheit verbessert wird und das Darkfading im Tropenschrank vollständig vermieden wird. Weiterhin fällt bei der Prüfung von Filterbelichtungen hinter Blau-, Grün- und Rotfilter auf, daß die Wiedergabe von grünen Feldern bei Verwendung erfindungsgemäßer Farbstoffe deutlich verbessert wird, ohne daß das Blaufeld abtrübt.

Die Nuance des Übertrages aus dem Blaugrün-Farbauszug läßt beim erfindungsgemäßen Farbspalter 3 eine deutliche Absenkung der Nebendichten, gemessen hinter Blau- und Grünfilter, erkennen.

**Formelanhang**

**Beizmittel A**

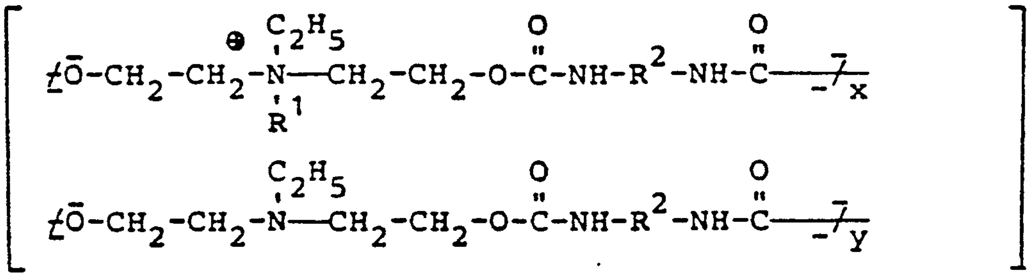

z 50 % $C_2H_5-O-SO_3^{\ominus}$

50 % $Cl^{\ominus}$

x 90 %

y 10 %

$R^1$ 50 % $-C_2H_5$

50 % 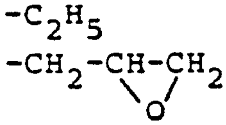

$R^2$ 70 % 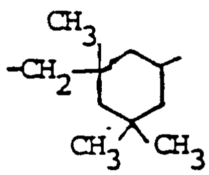

30 % 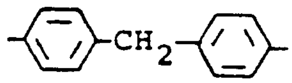

**Farbstoff B**

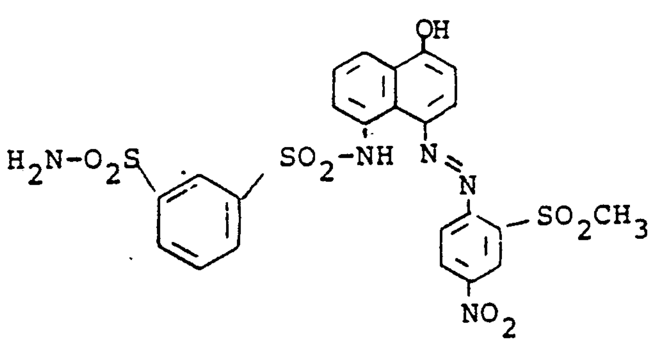

Farbabspalter C (gelb)

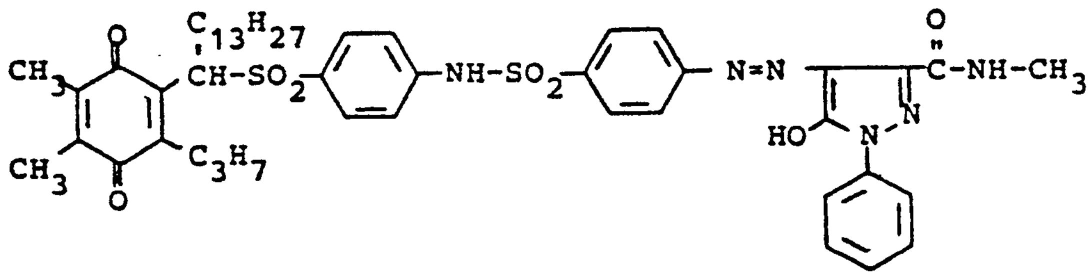

Farbabspalter D(purpur)

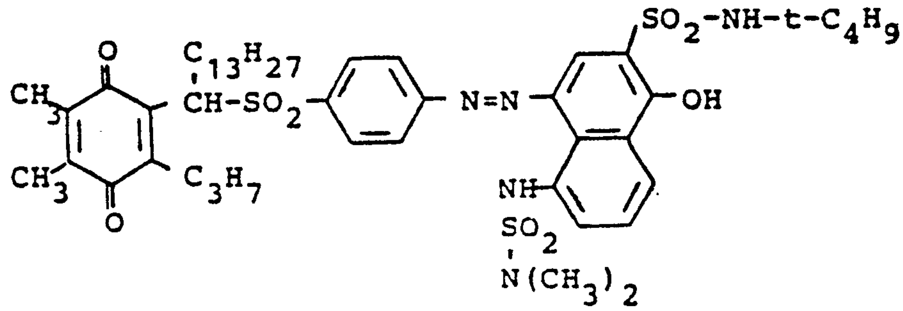

Farbabspalter E (blaugrün)

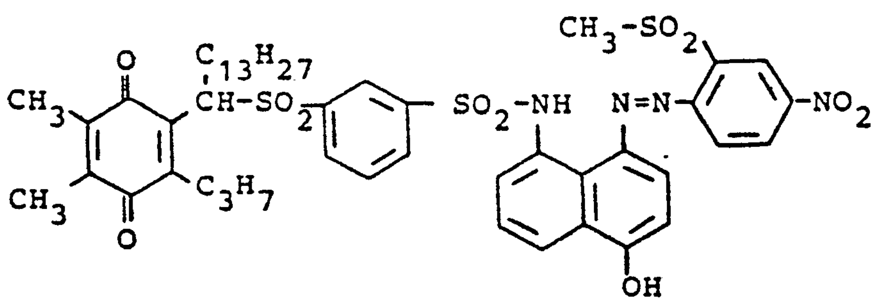

ED-Verbindung F

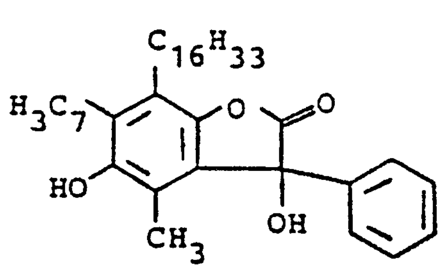

**Entwickelverbindung G)**

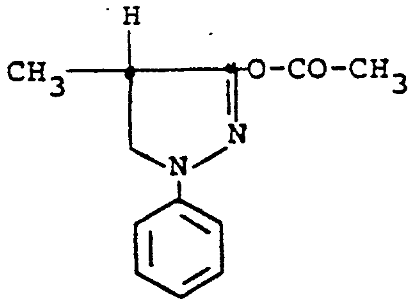

**Härtungsmittel H**

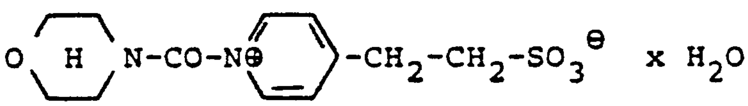

**Patentansprüche**

1. Farbfotografisches Aufzeichnungsmaterial für die Herstellung farbiger Bilder nach dem Farbdiffusionsübertragungsverfahren, das zugeordnet zu mindestens einer lichtempfindlichen Silberhalogenidemulsionsschicht eine nicht diffundierende farbgebende Verbindung (Farbabspalter) enthält, aus der unter den Bedingungen der alkalischen Entwicklung als Funktion der Entwicklung der Silberhalogenidemulsionsschicht ein diffusionsfähiger Azofarbstoff freigesetzt wird, dadurch gekennzeichnet, daß der Azofarbstoff der folgenden Formel I entspricht:

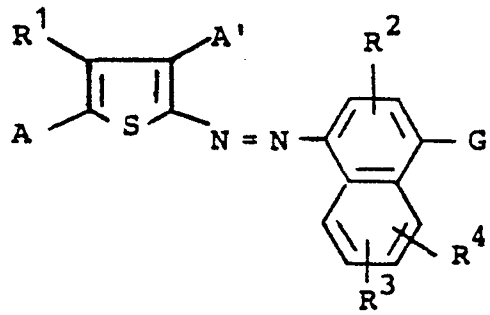

I

worin bedeuten

A -CO-$R^5$, -CN oder 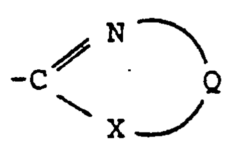

A' einen Rest wie definiert für A, oder $-CF_3$, $-CO-OR^6$, $-CO-NR^6-R^7$ oder $-SO_2-R^8$,
G -OH oder $-NH-SO_2-R^9$,
Q einen Rest, der zusammen mit N, C und X einen heterocyclischen Ring mit Elektronenakzeptorcharakter bildet,
X -O-, -S- oder $-NR^{10}$-,
$R^1$ H, Halogen, Alkyl, Aralkyl, Aryl, $-CO-OR^6$ oder einen Rest der zusammen mit A oder A' sowie den beiden beteiligten C-Atomen des Thiophenringes einen 5- bis 7-gliedrigen Ring bildet,
$R^2$ H oder einen bevorzugt ortho zu G angeordneten Rest mit Elektronenakzeptorcharakter,
$R^3$ H, Acylamino oder einen Rest G', der definiert ist wie G, aber keine Naphthsultamstruktur bilden kann,
$R^4$ H, $-SO_2-NR^6-R^7$ oder eine Bindung in peri-Stellung des Naphthalinringes, die zusammen mit G und den drei beteiligten C-Atomen des Naphthalinringes eine Naphthsultamstruktur bildet,
$R^5$ Alkyl, Aralkyl, Aryl, Thienyl oder einen Rest der zusammen mit $R^1$, der Carbonylgruppe, sowie den beiden beteiligten C-Atomen des Thiophenringes einen 5- bis 7-gliedrigen Ring bildet,
$R^6$ H, Alkyl, Aralkyl oder einen Rest, der zusammen mit $R^7$ und dem N-Atom den Rest einer cyclischen Aminogruppe bildet,
$R^7$ H, Alkyl, Aralkyl, Aryl oder einen Rest, der zusammen mit $R^6$ und dem N-Atom den Rest einer cyclischen Aminogruppe bildet,
$R^8$ H, Alkyl, Aralkyl oder Aryl,
$R^9$ Alkyl, Aralkyl, Aryl, $-NR^6-R^7$ oder eine Bindung zur peri-Stellung des Naphthalinringes, die zusammen mit der Sulfonamidgruppe und den drei beteiligten C-Atomen des Naphthalinringes eine Naphthsultamstruktur bildet, und
$R^{10}$ H oder Alkyl.

2. Aufzeichnungsmaterial nach Anspruch 1, dadurch gekennzeichnet, daß in Formel I A'-CN bedeutet.

3. Aufzeichnungsmaterial nach Anspruch 1, dadurch gekennzeichnet, daß der Azofarbstoff der folgenden Formel entspricht

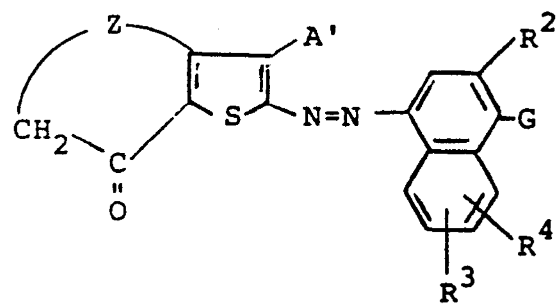

worin bedeuten
A' -CN, $-CF_3$ oder 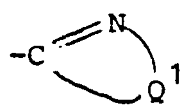 ,
G -OH oder $-NH-SO_2R^9$,
$Q^1$ einen Rest, der zusammen mit N und C den heterocyclischen Ring einer Benzoxazol-, Benzothiazol-, Benzimidazol-, Oxadiazol- oder Thiadiazolgruppe bildet,
Z eine gegebenenfalls substituierte Methylen- oder Ethylengruppe,
$R^2$ H, Cl, -CN oder $-SO_2-NR^6-R^7$,
$R^3$ H, Acylamino, -OH oder $-NH-SO_2-R^{9'}$,
$R^4$ H, $-SO_2-NR^6-R^7$ oder eine Bindung in peri-Stellung des Naphthalinringes, die zusammen mit G und den drei beteiligten C-Atomen des Naphthalinringes eine Naphthsultamstruktur bildet,
$R^6$ H, Alkyl, Aralkyl oder einen Rest, der zusammen mit $R^7$ und dem N-Atom den Rest einer cyclischen Aminogruppe bildet,
$R^7$ H, Alkyl, Aralkyl, Aryl oder einen Rest, der zusammen mit $R^6$ und dem N-Atom den Rest einer cyclischen Aminogruppe bildet,
$R^9$ Alkyl, Aralkyl, Aryl, $-NR^6-R^7$ oder eine Bindung zur peri-Stellung des Naphthalinringes, die zusammen mit der Sulfonamidgruppe und den drei beteiligten C-Atomen des Naphthalinringes eine Naphthsultamstruktur bildet, und
$R^{9'}$ Alkyl, Aralkyl, Aryl oder $-NR^6-R^7$.

4. Farbbild, bestehend aus einer auf einem Schichtträger angeordneten bildmäßigen Verteilung eines Anions aus einem blaugrünen Monoazofarbstoff der folgenden Formel

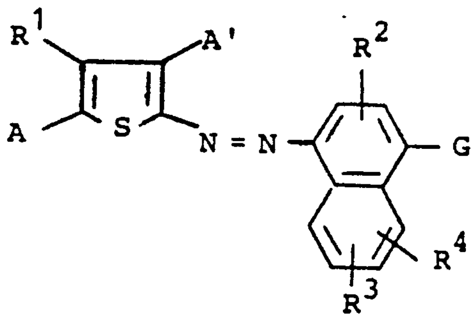

I

worin bedeuten

A $-CO-R^5$, $-CN$ oder 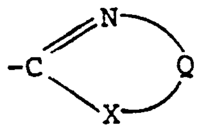 ,

A' einen Rest wie definiert für A, oder $-CF_3$, $-CO-OR^6$, $-CO-NR^6-R^7$ oder $-SO_2-R^8$,

G $-OH$ oder $-NH-SO_2-R^9$,

Q einen Rest, der zusammen mit N, C und X einen heterocyclischen Ring mit Elektronenakzeptorcharakter bildet,

X -O-, -S- oder $-NR^{10}-$,

$R^1$ H, Halogen, Alkyl, Aralkyl, Aryl, $-CO-OR^6$ oder einen Rest der zusammen mit A oder A' sowie den beiden beteiligten C-Atomen des Thiophenringes einen 5- bis 7-gliedrigen Ring bildet,

$R^2$ H oder einen bevorzugt ortho zu G angeordneten Rest mit Elektronenakzeptorcharakter,

$R^3$ H, Acylamino oder einen Rest G', der definiert ist wie G, aber keine Naphthsultamstruktur bilden kann,

$R^4$ H, $-SO_2-NR^6-R^7$ oder eine Bindung in peri-Stellung des Naphthalinringes, die zusammen mit G und den drei beteiligten C-Atomen des Naphthalinringes eine Naphthsultamstruktur bildet,

$R^5$ Alkyl, Aralkyl, Aryl, Thienyl oder einen Rest der zusammen mit $R^1$, der Carbonylgruppe, sowie den beiden beteiligten C-Atomen des Thiophenringes einen 5- bis 7-gliedrigen Ring bildet,

$R^6$ H, Alkyl, Aralkyl oder einen Rest, der zusammen mit $R^7$ und dem N-Atom den Rest einer cyclischen Aminogruppe bildet,

$R^7$ H Alkyl, Aralkyl, Aryl oder einen Rest, der zusammen mit $R^6$ und dem N-Atom den Rest einer cyclischen Aminogruppe bildet,

$R^8$ H, Alkyl, Aralkyl oder Aryl,

$R^9$ Alkyl, Aralkyl, Aryl, $-NR^6-R^7$ oder eine Bindung zur peri-Stellung des Naphthalinringes, die zusammen mit der Sulfoamidgruppe und den drei beteiligten C-Atomen des Naphthalinringes eine Naphthsultamstruktur bildet, und

$R^{10}$ H oder Alkyl.

5. Farbbild nach Anspruch 4, dadurch gekennzeichnet, daß in Formel I A' -CN bedeutet.

6. Farbbild nach Anspruch 4, dadurch gekennzeichnet, daß der Monoazofarbstoff der folgenden Formel entspricht:

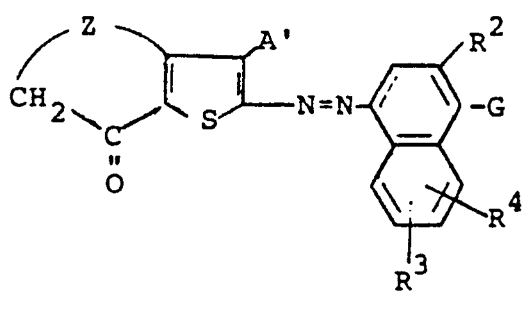

worin bedeuten
A' -CN, $-CF_3$ oder 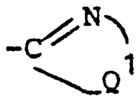 ,

G -OH oder $-NH-SO_2-R^9$,
$Q^1$ einen Rest, der zusammen mit N und C den heterocyclischen Ring einer Benzoxazol-, Benzothiazol-, Benzimidazol-, Oxadiazol- oder Thiadiazolgruppe bildet,
Z eine gegebenenfalls substituierte Methylen- oder Ethylengruppe,
$R^2$ H, Cl, -CN oder $-SO_2-NR^6-R^7$,
$R^3$ H, Acylamino, -OH oder $-NH-SO_2-R^{9'}$,
$R^4$ H, $-SO_2-NR^6-R^7$ oder eine Bindung in peri-Stellung des Naphthalinringes, die zusammen mit G und den drei beteiligten C-Atomen des Naphthalinringes eine Naphthsultamstruktur bildet,
$R^6$ H, Alkyl, Aralkyl oder einen Rest, der zusammen mit $R^7$ und dem N-Atom den Rest einer cyclischen Aminogruppe bildet,
$R^7$ H, Alkyl, Aralkyl, Aryl oder einen Rest, der zusammen mit $R^6$ und dem N-Atom den Rest einer cyclischen Aminogruppe bildet,
$R^9$ Alkyl, Aralkyl, Aryl, $-NR^6-R^7$ oder eine Bindung zur peri-Stellung des Naphthalinringes, die zusammen mit der Sulfonamidgruppe und den drei beteiligten C-Atomen des Naphthalinringes eine Naphthsultamstruktur bildet, und
$R^{9'}$ Alkyl, Aralkyl, Aryl oder $-NR^6-R^7$.

7. Monoazofarbstoffe der Formel

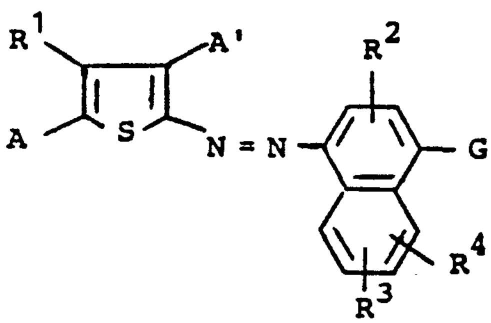

I

worin bedeuten
A $-CO-R^5$, -CN oder 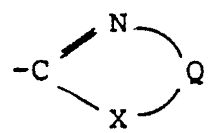

A' einen Rest wie definiert für A, oder $-CF_3$, $-CO-OR^6$, $-CO-NR^6-R^7$ oder $-SO_2-R^8$,
G -OH oder $-NH-SO_2-R^9$,
Q einen Rest, der zusammen mit N, C und X einen heterocyclischen Ring mit Elektronenakzeptorcharakter bildet,
X -O-, -S- oder $-NR^{10}-$,
$R^1$ H, Halogen, Alkyl, Aralkyl, Aryl, $-CO-OR^6$ oder einen Rest der zusammen mit A oder A' sowie den beiden beteiligten C-Atomen des Thiophenringes einen 5- bis 7-gliedrigen Ring bildet,
$R^2$ H oder einen bevorzugt ortho zu G angeordneten Rest mit Elektronenakzeptorcharakter,
$R^3$ H, Acylamino oder einen Rest G', der definiert ist wie G, aber keine Naphthsultamstruktur bilden kann,
$R^4$ H, $-SO_2-NR^6-R^7$ oder eine Bindung in peri-Stellung des Naphthalinringes, die zusammen mit G und den drei beteiligten C-Atomen des Naphthalinringes eine Naphthsultamstruktur bildet,
$R^5$ Alkyl, Aralkyl, Aryl, Thienyl oder einen Rest der zusammen mit $R^1$, der Carbonylgruppe, sowie den beiden beteiligten C-Atomen des Thiophenringes einen 5- bis 7-gliedrigen Ring bildet,
$R^6$ H, Alkyl, Aralkyl oder einen Rest, der zusammen mit $R^7$ und dem N-Atom den Rest einer cyclischen Aminogruppe bildet,
$R^7$ H, Alkyl, Aralkyl, Aryl oder einen Rest, der zusammen mit $R^6$ und dem N-Atom den Rest einer cyclischen Aminogruppe bildet,
$R^8$ H, Alkyl, Aralkyl oder Aryl,
$R^9$ Alkyl, Aralkyl, Aryl $-R^6-R^7$ oder eine Bindung zur peri-Stellung des Naphthalinringes, die zusammen mit der Sulfonamidgruppe und den drei beteiligten C-Atomen des Naphthalinringes eine Naphthsultamstruktur bildet, und

$R^{10}$ H oder Alkyl.
Monoazofarbstoff der Formel

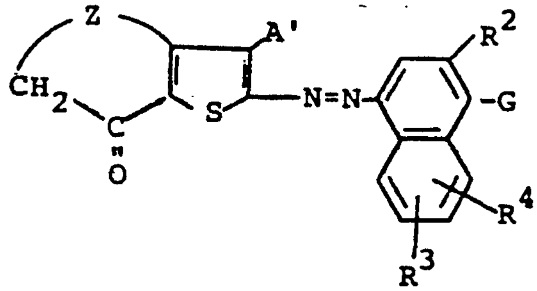

worin bedeuten
A' -CN, $-CF_3$ oder 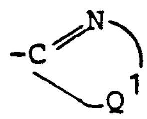 ,

G -OH oder $-NH-SO_2-R^9$,
$Q^1$ einen Rest, der zusammen mit N und C den heterocyclischen Ring einer Benzoxazol-, Benzothiazol-, Benzimidazol-, Oxadiazol- oder Thiadiazolgruppe bildet,
Z eine gegebenenfalls substituierte Methylen- oder Ethylengruppe,
$R^2$ H, Cl, -CN oder $-SO_2-NR^6-R^7$,
$R^3$ H, Acylamino, -OH oder $-NH-SO_2-R^{9'}$,
$R^4$ H, $-SO_2-NR^6-R^7$ oder eine Bindung in peri-Stellung des Naphthalinringes, die zusammen mit G und den drei beteiligten C-Atomen des Naphthalinringes eine Naphthsultamstruktur bildet,
$R^6$ H, Alkyl, Aralkyl oder einen Rest, der zusammen mit $R^7$ und dem N-Atom den Rest einer cyclischen aminogruppe bildet,
$R^7$ H, Alkyl, Aralkyl, Aryl oder einen Rest, der zusammen mit $R^6$ und dem N-Atom den Rest einer cyclischen Aminogruppe bildet,
$R^9$ Alkyl, Aralkyl, Aryl, $-NR^6-R^7$ oder eine Bindung zur peri-Stellung des Naphthalinringes, die zusammen mit der Sulfonamidgruppe und den drei beteiligten C-Atomen des Naphthalinringes eine Naphthsultamstruktur bildet, und
$R^9$ Alkyl, Aralkyl, Aryl oder $-NR^6-R^7$.

**Claims**

1. Colour photographic recording material for the production of coloured images by the dye diffusion transfer process, containing, associated with at least one light-sensitive silver halide emulsion layer, a non-diffusing colour-producing compound (dye releaser) from which a diffusible azo dye is released as a function of the development of the silver halide emulsion layer under the conditions of alkaline development, characterised in that the azo dye corresponds to the following formula I:

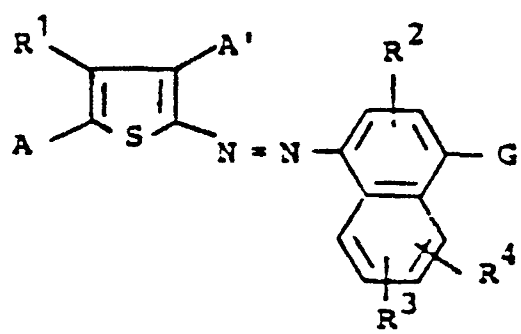

I

wherein
A represents $-CO-R^5$, $-CN$ or 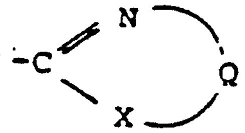

A' represents a group as defined for A, or $-CF_3$, $-CO-OR^6$, $-CO-NR^6-R^7$ or $-SO_2-R^8$,
G represents $-OH$ or $-NH-SO_2-R^9$,
Q represents a group which together with N, C and X forms a heterocyclic ring having an electron acceptor character,
X represents -O-, -S- or $-NR^{10}-$,
$R^1$ represents H, halogen, alkyl, aralkyl, aryl, $-CO-OR^6$ or a group which, together with A or A' and the two participating C atoms of the thiophene ring, forms a 5- to 7-membered ring,
$R^2$ represents H or a group with an electron acceptor character preferably arranged in the ortho-position to G,
$R^3$ represents H, acylamino or a group G' which has the definition of G but cannot form a naphthosultam structure,
$R^4$ represents H, $-SO_2-NR^6-R^7$ or a bond in the periposition of the naphthalene ring, which forms, together with G and the three participating C atoms of the naphthalene ring, a naphthosultam structure,
$R^5$ represents alkyl, aralkyl, aryl, thienyl or a group which together with $R^1$, the carbonyl group and the two participating C atoms of the thiophene ring, forms a 5- to 7-membered ring,
$R^6$ represents H, alkyl, aralkyl or a group which, together with $R^7$ and the N atom, froms the residue of a cyclic amino group,
$R^7$ represents H, alkyl, aralkyl, aryl or a group which, together with $R^6$ and the N atom, forms the residue of a cyclic amino group,
$R^8$ represents H, alkyl, aralkyl or aryl,
$R^9$ represents alkyl, aralkyl, aryl, $-NR^6-R^7$ or a linkage to the peri-position of the naphthalene ring, which forms, together with the sulphonamide group and the three participating carbon atoms of the naphthalene ring, a naphthosultam structure, and
$R^{10}$ represents H or alkyl.

2. Recording material according to claim 1, characterised in that in formula I, A' reprenents -CN.

3. Recording material according to claim 1 characterised in that the azo dye corresponds to the following formula

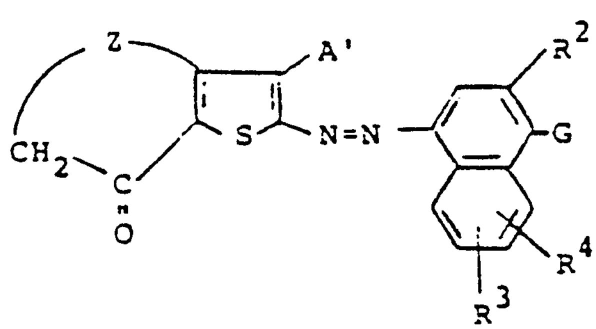

wherein
A' represents $-CN$, $-CF_3$ or 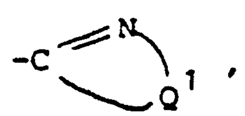

G represents $-OH$ or $-NH-SO_2R^9$,
$Q^1$ represents a group which, together with N and C, forms the heterocyclic ring of a benzoxazole, benzothiazole, benzimidazole, oxadiazole or thiadiazole group,
Z represents an optionally substituted methylene or ethylene group,
$R^2$ represents H, Cl, -CN or $-SO_2-NR^6-R^7$,
$R^3$ represents H, acylamino, -OH or $-NH-SO_2-R^{9'}$,
$R^4$ represents H, $-SO_2-NR^6-R^7$ or a bond in the peri-position of the naphthalene ring, which forms, together with G and the three participating C atoms of the naphthalene ring, a naphthosultam structure,
$R^6$ represents H, alkyl, aralkyl or a group which, together with $R^7$ and the N atom, forms the residue of a cyclic amino group,
$R^7$ represents H, alkyl, aralkyl, aryl or a group which, together with $R^6$ and the N atom, forms the residue of a cyclic amino group,

$R^9$ represents alkyl, aralkyl, aryl, $-NR^6-R^7$ or a linkage to the peri-position of the naphthalene ring, which forms, together with the sulphonamide group and the three participating C atoms of the naphthalene ring, a naphthosultam structure, and

$R^{9'}$ represents alkyl, aralkyl, aryl or $-NR^6-R^7$.

4. Coloured image consisting of an imagewise distribution, arranged on a layer support, of an anion of a cyan monoazo dye of the following formula

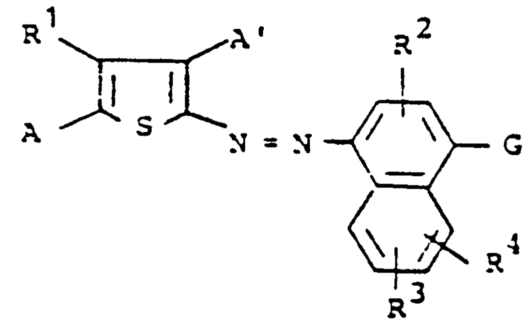

I

wherein

A represents $-CO-R^5$, -CN or 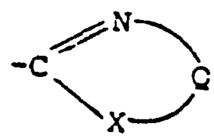 ,

A' represents a group as defined for A, or $-CF_3$, $-CO-OR^6$, $CO-NR^6-R^7$ or $-SO_2-R^8$,

G represents -OH or $-NH-SO_2-R^9$,

Q represents a group which, together with N, C and X, forms a heterocyclic ring having an electron acceptor character,

X represents -O-, -S- or $-NR^{10}-$,

$R^1$ represents H, halogen, alkyl, aralkyl, aryl, $-CO-OR^6$ or a group which, together with A or A' and the two participating C atoms of the thiophene ring, forms a 5- to 7-membered ring,

$R^2$ represents H or a group having an electron acceptor character, preferably arranged in the ortho-position to G,

$R^3$ represents H, acylamino or a group G' which has the definition of G but cannot form a naphthosultam structure,

$R^4$ represents H, $-SO_2-NR^6-R^7$ or a bond in the peri-position of the naphthalene ring, which forms, together with G and the three participating C atoms of the naphthalene ring, a naphthosultam structure,

$R^5$ represents alkyl, aralkyl, aryl, thienyl or a group which, together with $R^1$, the carbonyl group and the two participating C atoms of the thiophene ring, forms a 5- to 7-membered ring,

$R^6$ represents H, alkyl, aralkyl or a group which, together with $R^7$ and the N atom, forms the residue of a cyclic amino group,

$R^7$ represents H, alkyl, aralkyl, aryl or a group which, together with $R^6$ and the N atom, forms the residue of a cyclic amino group,

$R^8$ represents H, alkyl, aralkyl or aryl,

$R^9$ represents alkyl, aralkyl, aryl, $-NR^6-R^7$ or a linkage to the peri-position of the naphthalene ring, which forms, together with the sulphonamide group and the three participating C atoms of the naphthalene ring, a naphthosultam structure, and

$R^{10}$ represents H or alkyl.

5. Coloured image according to claim 4, characterised in that in formula I, A' represents -CN.

6. Coloured image according to claim 4, characterised in that the monoazo dye corresponds to the following formula:

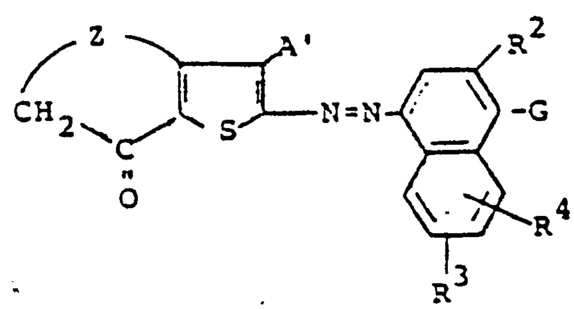

wherein
A' represents -CN, $-CF_3$ or 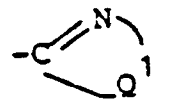 ,

G represents -OH or $-NH-SO_2-R^9$,
$Q^1$ represents a group which, together with N and C, forms the heterocyclic ring of a benzoxazole, benzothiazole, benzimidazole, oxadiazole or thiadiazole group,
Z represents an optionally substituted methylene or ethylene group,
$R^2$ represents H, Cl, -CN or $-SO_2-NR^6-R^7$,
$R^3$ represents H, acylamino, -OH or $-NH-SO_2-R^{9'}$,
$R^4$ represents H, $-SO_2-NR^6-R^7$ or a bond in the peri-position of the naphthalene ring, which forms, together with G and the three participating C atoms of the naphthalene ring, a naphthosultam structure,
$R^6$ represents H, alkyl, aralkyl or a group which, together with $R^7$ and the N atom, forms the residue of a cyclic amino group,
$R^7$ represents H, alkyl, aralkyl, aryl or a group which, together with $R^6$ and the N atom, forms the residue of a cyclic amino group,
$R^9$ represents alkyl, aralkyl, aryl, $-NR^6-R^7$ or a linkage to the peri-position of the naphthalene ring, which forms, together with the sulphonamide group and the three participating C atoms of the naphthalene ring, a naphthosultam structure, and
$R^{9'}$ represents alkyl, aralkyl, aryl or $-NR^6-R^7$.

7. Monoazo dyes of the formula

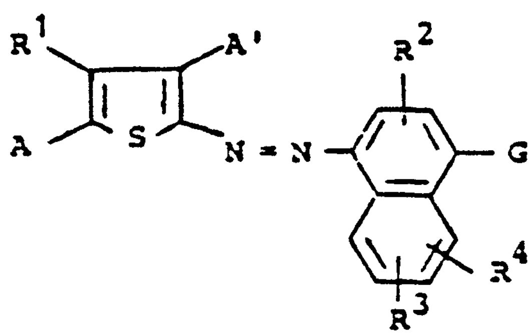

I

wherein
A represents $-CO-R^5$, -CN or 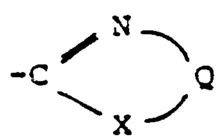

A' represents a group as defined for A, or $-CF_3$, $-CO-OR^6$, $CO-NR^6-R^7$ or $-SO_2-R^8$,
G represents -OH or $-NH-SO_2-R^9$,
Q represents a group which, together with N, C and X, forms a heterocyclic ring having an electron acceptor character,
X represents -O-, -S- or $-NR^{10}-$,
$R^1$ represents H, halogen, alkyl, aralkyl, aryl, $-CO-OR^6$ or a group which, together with A or A' and the two participating C atoms of the thiophene ring, forms a 5- to 7-membered ring,
$R^2$ represents H or a group having an electron acceptor character preferably arranged in the ortho-position to G,
$R^3$ represents H, acylamino or a group G' which has the definition of G but cannot form a naphthosultam structure,
$R^4$ represents H, $-SO_2-NR^6-R^7$ or a bond in the periposition of the naphthalene ring, which forms, together with G and the three participating C atoms of the naphthalene ring, a naphthosultam structure,
$R^5$ represents alkyl, aralkyl, aryl, thienyl or a group which, together with $R^1$, the carbonyl group and the two participating C atoms of the thiophene ring, forms a 5- to 7-membered ring,
$R^6$ represents H, alkyl, aralkyl or a group which, together with $R^7$ and the N atom, forms the residue of a cyclic amino group,
$R^7$ represents H, alkyl, aralkyl, aryl or a group which, together with $R^6$ and the N atom, forms the residue of a cyclic amino group,
$R^8$ represents H, alkyl, aralkyl or aryl,
$R^9$ represents alkyl, aralkyl, aryl, $-R^6-R^7$ or a linkage to the peri-position of the naphthalene ring, which forms, together with the sulphonamide group and the three participating C atoms of the naphthalene ring, a naphthosultam structure, and
$R^{10}$ represents H or alkyl.

8. Monoazo dye of the formula

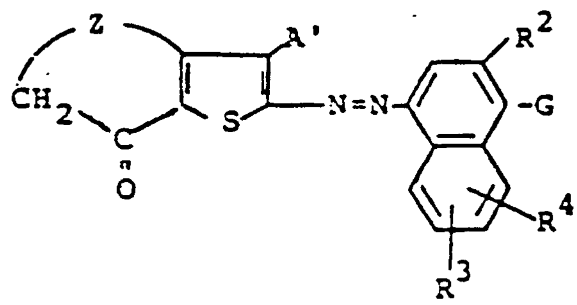

wherein

A' represents -CN, $-CF_3$ or 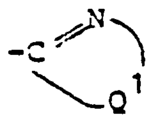 ,

G represents -OH or $-NH-SO_2-R^9$,

$Q^1$ represents a group which, together with N and C, forms the heterocyclic ring of a benzoxazole, benzothiazole, benzimidazole, oxadiazole or thiadiazole group,

Z forms an optionally substituted methylene or ethylene group,

$R^2$ represents H, Cl, -CN or $-SO_2-NR^6-R^7$,

$R^3$ represents H, acylamino, -OH or $-NH-SO_2-R^{9'}$,

$R^4$ represents H, $-SO_2-NR^6-R^7$ or a bond in the peri-position of the naphthalene ring, which forms, together with C and the three participating C atoms of the naphthalene ring, a naphthosultam structure,

$R^6$ represents H, alkyl, aralkyl or a group which, together with $R^7$ and the N atom, forms the residue of a cyclic amino group,

$R^7$ represents H, alkyl, aralkyl, aryl or a group which, together with $R^6$ and the N atom, forms the residue of a cyclic amino group,

$R^9$ represents alkyl, aralkyl, aryl, $-NR^6-R^7$ or a linkage to the peri-position of the naphthalene ring, which forms, together with the sulphonamide group and the three participating C atoms of the naphthalene ring, a naphthosultam structure, and

$R^{9'}$ represents alkyl, aralkyl, aryl or $-NR^6-R^7$.

**Revendications**

1. Matériau d'enregistrement photographique couleurs pour la production d'images couleurs selon le procédé de transfert des colorants par diffusion qui contient, associé à au moins une couche d'émulsion d'halogénure d'argent sensible à la lumière, un composé chromogène non diffusible (générateur de colorant) qui libère dans les conditions du développement alcalin, en fonction du développement de la couche d'émulsion d'halogénure d'argent, un colorant azoïque diffusible, qui est caractérisé en ce que le colorant azoïque correspond à la formule I suivante:

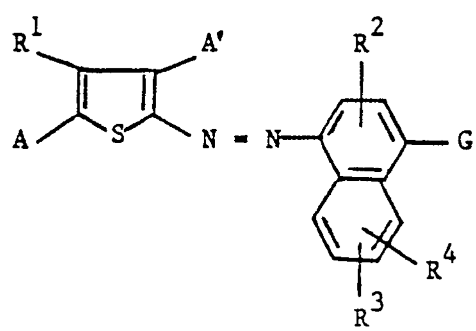 I

dans laquelle :

A représente $-CO-R^5$, -CN ou 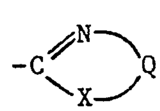

A' représente un reste tel que défini pour A, ou bien un reste $-CF_3$, $-CO-OR^6$, $-CO-NR^6-R^7$ ou $-SO_2-R^8$
G représente un groupe -OH ou $-NH-SO_2R^9$,
Q représente un reste qui, pris avec le groupe N, C et X, forme un noyau hétérocyclique à caractère d'accepteur d'électrons,
X représente -O-, -S- ou $-NR^{10}-$,
$R^1$ représente H ou un halogène ou un groupe alkyle, aralkyle, aryle, $-CO-OR^6$ ou un reste qui, pris avec A ou A' et les deux atomes de carbone concernés du noyau thiophène, forme un noyau à 5-7 chaînons.
$R^2$ représente H ou un reste à caractère d'accepteur d'électrons, situé de préférence en ortho par rapport à G
$R^3$ représente H, acylamino ou un reste G' qui est défini comme G, mais ne peut pas former de structure naphtosultame.
$R^4$ represente H, $-SO_2-NR^6-R^7$ ou une liaison en position péri du noyau naphtalène qui, prise avec G et les trois atomes de carbone concernés du noyau naphtalène, forme une structure naphtosultame,
$R^5$ représente un groupe alkyle, aralkyle, aryle, thiényle ou un reste qui, pris avec $R^1$, le groupe carbonyle et les deux atomes de carbone concernés du noyau thiophène, forme un noyau à 5-7 chaînons,
$R^6$ représente H ou un groupe alkyle, aralkyle ou un reste qui, pris avec $R^7$ et l'atome d'azote, forme le reste d'un groupe amino cyclique,
$R^7$ représente H ou un groupe alkyle, aralkyle, aryle ou un reste qui, pris avec $R^6$ et l'atome d'azote, forme le reste d'un groupe amino cyclique,
$R^8$ représente H ou un groupe alkyle, aralkyle ou aryle,
$R^9$ représente un groupe alkyle, aralkyle, aryle ou $-NR^6-R^7$ ou une liaison avec la position péri du noyau naphtalène qui, avec le groupe sulfonamido et les trois atomes de carbone concernés du noyau naphtalène, forme une structure naphtosultame, et
$R^{10}$ represente H ou un groupe alkyle.

2. Matériau d'enregistrement selon la revendication 1, caractérisé en ce que, dans la formule I, le reste A' représente -CN.

3. Matériau d'enregistrement selon la revendication 1, caractérisé en ce que le colorant azoïque correspond à la formule suivante :

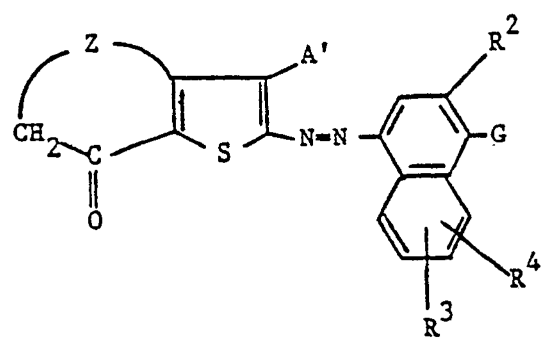

:

dans laquelle:
A' représente -CN, $-CF_3$ ou 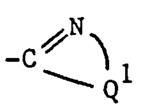 ,
G représente -OH ou $-NH-SO_2R^9$,
$Q^1$ représente un reste qui forme avec N et C le noyau hétérocyclique d'un groupe benzoxazole, benzothiazole, benzimidazole, oxadiazole ou thiadiazole,
Z représente un groupe méthylène ou éthylène éventuellement substitué,
$R^2$ représente H, Cl, -CN ou$-SO_2-NR^6-R^7$,
$R^3$ représente H, acylamino, OH ou $-NH-SO_2-R^{9'}$,
$R^4$ représente H, $-SO_2-NR^6-R^7$ ou une liason en position péri du noyau naphtalène qui, avec G et les trois atomes de carbone concernés du noyau naphtalène, forme une structure naphtosultame,
$R^6$ représente H ou un groupe alkyle ou aralkyle ou un reste qui, pris avec $R^7$ et l'atome d'azote, forme le reste d'un groupe amino cyclique,
$R^7$ represente H, alkyle, aralkyle, aryle ou un reste qui forme avec $R^6$ et l'atome d'azote le reste de groupe amino cyclique,
$R^9$ représente un groupe alkyle, aralkyle, aryle ou $-NR^6-R^7$ ou une liaison avec la position péri du noyau naphtalène qui, prise avec le groupe sulfonamido et les trois atomes de carbone concernés du noyau naphtalène, forme une structure naphtosultame,
$R^9$ représente un groupe alkyle, aralkyle, aryle ou $-NR^6-R^7$.

4. Image en couleurs, consistant en une distribution suivant l'image, disposée sur un support de couche, d'un anion dérivé d'un colorant monoazoïque bleu-vert de formule suivante :

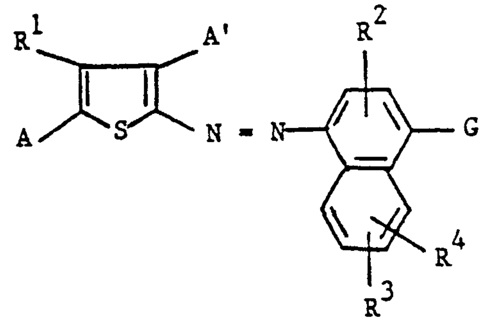

I

dans laquelle :
A représente -CO-$R^5$, -CN ou 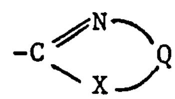

FIG147/25

A' représente un reste tel que défini pour A ou un groupe -$CF_3$, -CO-$OR^6$, -CO-$NR^6$-$R^7$ ou -$SO_2$-$R^8$,
G représente un groupe -OH ou -NH-$SO_2R^9$,
Q représente un reste qui forme, avec N, C et X, un noyau hétérocyclique à caractère d'accepteur d'électrons,
X représente -O-, -S- ou -$NR^{10}$-,
$R^1$ représente H, ou un halogène ou un groupe alkyle, aralkyle, aryle -CO-$OR^6$ ou un reste qui, pris avec A ou A' et les deux atomes de carbone concernés du noyau thiophène, forme un noyau è 5-7 chaînons,
$R^2$ représente H, ou un reste à caractère d'accepteur d'électrons situé de préférence en ortho par rapport à G,
$R^3$ représente H, ou un groupe acylamino ou un reste G' qui est défini comme G, mais qui ne peut pas former de structure naphtosultame,
$R^4$ represente H, ou un groupe -$SO_2$-$NR^6$-$R^7$ ou une liaison en position péri du noyau naphtalène qui, prise avec G et les trois atomes de carbone concernés du noyau naphtalène, forme une structure naphtosultame,
$R^5$ représente un groupe alkyle, aralkyle, aryle, thiényle ou un reste qui, pris avec $R^1$, le groupe carbonyle et les deux atomes de carbone concernés du noyau thiophène, forme un noyau à 5-7 chaînons,
$R^6$ représente H, ou un groupe alkyle, aralkyle ou un reste qui, pris avec $R^7$ et l'atome d'azote, forme le reste d'un groupe amino cyclique,
$R^7$ représente H, ou un groupe alkyle, aralkyle ou aryle ou un reste qui, pris avec $R^6$ et l'atome d'azote, forme le reste d'un groupe amino cyclique,
$R^8$ représente H, ou un groupe alkyle, aralkyle ou aryle,
$R^9$ represente un groupe alkyle, aralkyle, aryle ou -$NR^6$-$R^7$ ou une liaison avec la position péri du noyau naphtalène qui, prise avec le groupe sulfonamido et les trois atomes de carbone concernés du noyau naphtalène, forme une structure naphtosultame, et $R^{10}$ représente H ou un groupe alkyle.

5. Image en couleurs selon la revendication 4, caractérisée en ce que, dans la formule I, le reste A' représente -CN.

6. Image en couleurs selon la revendication 4, caractérisée en ce que le colorant monoazoïque correspond à la formule suivante :

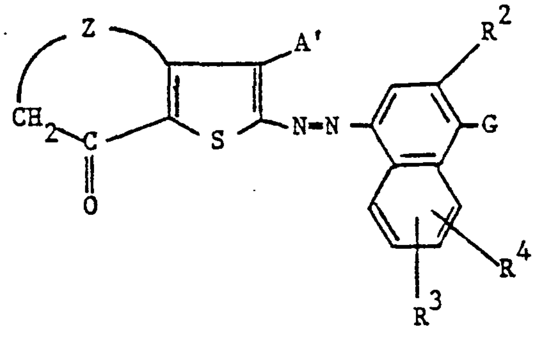

dans laquelle :
A représente un gorupe -CN, $-CF_3$ ou 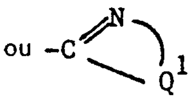

G représente un groupe -OH ou $-NH-SO_2-R^9$,
$Q^1$ représente un reste qui forme, avec N et C, le noyau hétérocyclique d'un groupe benzoxazole, benzothiazole, benzimidazole, oxadiazole ou thiadiazole,
Z représente un groupe méthylène ou éthylène éventuellement substitué,
$R^2$ représente H, Cl, -CN ou $-SO_2-NR^6-R^7$,
$R^3$ représente H, ou un groupe acylamino, -OH ou $-NH-SO_2-R^{9'}$,
$R^4$ represente H, ou un groupe $-SO^2-NH^6R^7$ ou une liaison en position péri du noyau naphtalène qui forme, avec G et les trois atomes de carbone concernés du noyau naphtalène, une structure naphtosultame,
$R^6$ représente H, ou un groupe alkyle ou aralkyle ou un reste qui forme, avec $R^7$ et l'atome d'azote, le reste d'un groupe amino cyclique,
$R^7$ représente H ou un groupe alkyle, aralkyle ou aryle ou un reste qui forme, avec $R^6$ et l'atome d'azote, le reste d'un groupe amino cyclique,
$R^9$ représente un groupe alkyle, aralkyle, aryle ou $-NR^6-R^7$ ou une liaison avec la position péri du noyau naphtalène qui forme, avec le groupe sulfonamido et les trois atomes de carbone concernés du noyau naphtalène, une structure naphtosultame,
$R^{9'}$ représente un groupe alkyle, aralkyle, aryle ou $-NR^6-R^7$.
7. Colorants monoazoïques de formule:

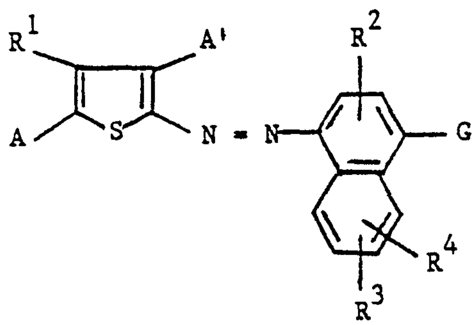

I

dans laquelle :.
A représente $-CO-R^5$, -CN ou 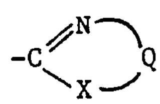

$A^1$ représente un reste tel que défini pour A, ou bien un reste $-CF_3$, $-CO-OR^6$, $-CO-NR^6-R^7$ ou $-SO_2-R^8$,
G représente un groupe -OH ou $-NH-SO_2-R^9$,
Q représente un reste qui forme, avec N, C et X, un noyau hétérocyclique à caractère d'accepteur d'électrons,
X représente -O-, -S- ou $-NR^{10}-$,
$R^1$ représente H, ou un halogène ou un groupe alkyle, aralkyle, aryle ou $-CO-OR^6$ ou un reste qui forme, avec A ou A' et les deux atomes de carbone concernés du noyau thiophène, un noyau à 5-7 chaînons,
$R^2$ représente H ou un reste à caractère d'accepteur d'électrons, de préference en ortho par rapport à G,
$R^3$ représente H, ou un groupe acylamino ou un reste G' qui est défini comme G, mais qui ne peut pas former de structure naphtosultame,
$R^4$ représente H ou un groupe $-SO_2-NR^6-R^7$ ou une liaison en position péri du noyau naphtalène qui forme, avec G et les trois atomes de carbone concernés du noyau naphtalène, une structure naphtosultame,
$R^5$ représente un groupe alkyle, aralkyle, aryle ou thiényle ou un reste qui forme, avec $R^1$, le groupe carbonyle et les deux atomes de carbone concernés du noyau thiophène, un noyau è 5-7 chaînons,
$R^6$ représente H, ou un groupe alkyle ou aralkyle ou un reste qui forme, avec $R^7$ et l'atome d'azote, le reste d'un groupe amino cyclique,
$R^7$ représente H, ou un groupe alkyle, aralkyle ou aryle ou un reste qui forme, avec $R^6$ et l'atome d'azote, le reste d'un groupe amino cyclique,
$R^8$ représente H, ou un groupe alkyle, aralkyle ou aryle,

$R^9$ représente un groupe alkyle, aralkyle, aryle ou $-NR^6-R^7$ ou une liaison avec la position péri du noyau naphtalène qui forme, avec le groupe sulfonamido et les trois atomes de carbone concernés du noyau naphtalène, une structure naphtosultame,

$R^{10}$ représente H, ou un groupe alkyle.

8. Colorant monoazoïque de formule:

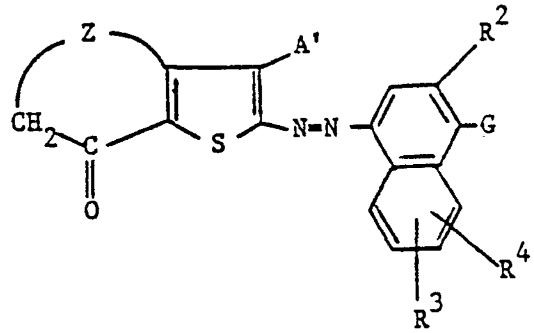

dans laquelle:

A' représente un groupe -CN, $-CF_3$ ou 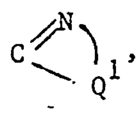 ,

G représente un groupe OH ou $-NH-SO_2-R^9$,

$Q^1$ représente un reste qui forme, avec N et C, le noyau hétérocyclique d'un groupe benzoxazole, benzothiazole, benzimidazole, oxadiazole ou thiadiazole,

Z représente un groupe méthylène ou éthylène éventuellement substitué,

$R^2$ représente H, Cl, -CN ou un groupe $-SO_2-NR^6-R^7$,

$R^3$ représente H, ou un groupe acylamino -OH ou $-NH-SO_2-R^{9'}$,

$R^4$ représente H, ou un groupe $-SO_2-NR^6-R^7$ ou une liaison en position péri du noyau naphtalène qui forme, avec G et les trois atomes de carbone concernés du noyau naphtalène, une structure naphtosultame,

$R^6$ représente H ou un groupe alkyle ou aralkyle ou un reste qui forme avec $R^7$ et l'atome d'azote le reste d'un groupe amino cyclique.

$R^7$ représente H ou un groupe alkyle, aralkyle ou aryle ou un reste qui forme, avec $R^6$ et l'atome d'azote, le reste d'un groupe amino cyclique.

$R^9$ represente un groupe alkyle, aralkyle, aryle ou $-NR^6-R^7$ ou une liaison avec la position péri du noyau naphtalène qui forme, avec le groupe sulfonamido et les trois atomes de carbone concernés du noyau naphtalène, une structure naphtosultame, et

$R^{9'}$ représente un groupe alkyle, aralkyle, aryle ou $-NR^6-R^7$.